(19) Europäisches Patentamt
European Patent Office
Office européen des brevets

(11) **EP 3 576 368 A1**

(12) **EUROPÄISCHE PATENTANMELDUNG**

(43) Veröffentlichungstag:
04.12.2019 Patentblatt 2019/49

(21) Anmeldenummer: **18180845.2**

(22) Anmeldetag: **29.06.2018**

(51) Int Cl.:
*H04L 29/06* *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **29.05.2018  EP 18174946**

(71) Anmelder:
• **Siemens Aktiengesellschaft**
**80333 München (DE)**

• **Siemens Financial Services GmbH**
**81739 München (DE)**

(72) Erfinder:
• **Firnkorn, Lutz**
**49076 Osnabrück (DE)**
• **Sokol, Joachim**
**82008 Unterhaching (DE)**
• **Weber, Martin**
**81379 München (DE)**

(74) Vertreter: **Maier, Daniel Oliver**
**Siemens AG**
**Postfach 22 16 34**
**80506 München (DE)**

(54) **VERFAHREN UND SYSTEM ZUM STEUERN EINER FREIGABE EINER RESSOURCE**

(57)    Mit der Erfindung kann auf einfache Weise eine Ressourcensteuerung für vernetzte Geräte realisiert werden, bei denen die Teilnehmer der vernetzten Geräte sich jeweils nicht vertrauen. Insbesondere wird die Erfindung durch ein verteiltes Datenbanksystem realisiert, das beispielsweise mittels einer Blockkette implementiert ist.

Fig. 3

**Beschreibung**

Die Erfindung bezieht sich auf ein Verfahren und System zum Steuern einer Freigabe einer Ressource.

Geräte, wie Feldgeräte und Fertigungsgeräte, werden immer stärker vernetzt und können beispielsweise von unterschiedlichen Betreibern bereitgestellt/betrieben werden. Diesen Geräten werden oft Befehlsfolgen übermittelt, die durch die Geräte ausgeführt werden können. Nachteilig ist dabei, dass eine Abarbeitung der Befehlsfolgen in einem heterogenen Netz aus Geräten von unterschiedlichen Betreibern schwer zu steuern ist. Insbesondere die Freigabe von Ressourcen, die einem Objekt zugeordnet sind, können in komplex verteilten Systemen nur schwer gesteuert werden.

Eine Aufgabe der vorliegenden Erfindung ist es, eine Alternative zu bekannten Lösungen aus dem Stand der Technik zu finden.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Technologie von Blockketten (engl. Blockchains) bzw. "Distributed Ledgers" ist aktuell eine intensiv diskutierte Technologie, die insbesondere als verteiltes Datenbanksystem realisiert sein kann. Neben Anwendungen für dezentrale Bezalsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Gemäß einem ersten Aspekt betrifft die Erfindung ein Steuersystem zum Steuern eines Ressourcenfreigabemoduls zur Bereitstellung von Ressourcen umfassend:

-   einen Sender zum Senden eines Bereitstellungsanfragedatensatzes mittels eines ersten Kommunikationsmoduls, wobei

    -   der Bereitstellungsanfragedatensatz eine Bereitstellungsanforderung für eine einem Objekt zugeordneten Ressource umfasst,
    -   der Bereitstellungsanfragedatensatz Senderinformationen des Senders des Bereitstellanfragedatensatzes umfasst,
    -   der Bereitstellungsanfragedatensatz einen objektspezifischen Objektdatensatz für das Objekt umfasst;

-   ein verteiltes Datenbanksystem aufweisend

    -   eine Vielzahl von Knoten, wobei die Knoten über ein erstes Kommunikationsnetzwerk miteinander verbunden sind;
    -   zweites Kommunikationsmodul zum Empfangen des Bereitstellungsanfragedatensatzes;
    -   ein erstes Überprüfungsmodul zum Überprüfen des Senders anhand der Senderinformationen, wobei das erste Überprüfungsmodul ein entsprechendes Senderprüfergebnis bereitstellt;
    -   ein erstes Speichermodul zum Speichern des Bereitstellungsanfragedatensatzes mit dem entsprechenden Senderprüfergebnis in einer Anfragetransaktion, wobei

        -   die Anfragetransaktion mittels des verteilten Datenbanksystems gespeichert wird,
        -   die Anfragetransaktion mittels des verteilten Datenbanksystems an eine vorgegebene Anzahl von Empfängern übermittelt,
        -   die vorgegebene Anzahl von Empfängern anhand des Senderprüfergebnis und/oder der Senderinformationen und/oder des objektspezifischen Objektdatensatzes ermittelt wird;

    -   eine vorgegebene Anzahl von Anfrageverarbeitungsknoten, wobei

        -   die vorgegebene Anzahl von Anfrageverarbeitungsknoten die vorgegebene Anzahl von Empfängern ist,
        -   jeweils die Anfrageverarbeitungsknoten eine objektspezifische Berechtigungsfreigabe anhand der Bereitstellungsanforderung, des objektspezifischen Objektdatensatzes und der Senderinformation ermittelt,
        -   beispielsweise die jeweiligen objektspezifische Berechtigungsfreigabe in Transaktionen des verteilten Datenbanksystems gespeichert werden;

    -   ein Berechtigungssteuerungsmodul zum Ermitteln einer Gesamtberechtigungsfreigabe der dem Objekt zugeordneten Ressource, wobei

- zum Ermitteln der Gesamtberechtigungsfreigabe die jeweiligen objektspezifischen Berechtigungsfreigaben der jeweiligen Anfrageverarbeitungsknoten berücksichtigt werden;
- beispielsweise die Gesamtberechtigungsfreigabe in Transaktionen des verteilten Datenbanksystems gespeichert werden;

- ein Ressourcenfreigabemodul, wobei

- mittels der Gesamtberechtigungsfreigabe ein Bereitstellen der dem Objekt zugeordneten Ressource gesteuert wird.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren. Ein Modul kann beispielsweise auch ein Knoten des verteilten Datenbanksystems sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID)) ein zweites Datum zugeordnet, in dem z. B. das erste Datum zusammen mit der Speicheradresse oder des eindeutigen Identifizierers des zweites Datums zusammen in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) verstanden werden.

Unter "Smart-Contract-Prozess" kann im Zusammenhang mit der Erfindung insbesondere ein Ausführen eines Programmcodes (z. B. der Steuerbefehle) in einem Prozess durch das verteilte Datenbanksystem bzw. deren Infrastruktur verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten(sätze) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transkationen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems den vorhergehenden Datenblock des verteilten Datenbanksystems angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems) verwendet werden, um einen neuen Datenblock mit einem (vorhandenen) Datenblock des verteilten Datenbanksystems zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen bezieht. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann. Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transkation eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems sein, eine Transaktionsprüfsumme eines Datenblocks mit den entsprechenden Daten (des verteilten Datenbanksystems oder einer anderen Datenbank) oder eine Datenprüfsumme, die über die Daten gebildet wurde.

Zusätzlich kann die entsprechende Transkation noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank, welche die Daten umfasst) umfassen. Die entsprechenden Daten könnten dann beispielsweise auch in einer weiteren Transaktion eines weiteren Datenblocks des verteilten Datenbanksystems bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in den entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems möglichst gering zu halten.

Unter "sicherheitsgeschützt" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Verketten der/von Datenblöcken eines verteilten Datenbanksystems" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems verweisen bzw. diese referenzieren [1] [4] [5] .

Unter "Einfügen in das verteilte Datenbanksystem" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, einen Blockketten-Orakel oder eine Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transaktionen umfasst. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transaktion kann insbesondere einen Programmcode umfassen, der beispielsweise einen Smart Contract realisiert. Beispielsweise können im Zusammenhang mit der Erfindung unter Transaktion auch eine Steuertransaktionen und/oder Bestätigungstransaktion verstanden werden. Alternativ kann eine Transaktion beispielsweise eine Datenstruktur sein, die Daten speichert (z. B. die Steuerbefehle und/oder Vertragsdaten und/oder andere Daten wie Videodaten, Nutzerdaten, Messdaten etc.).

Unter "Objekt" können im Zusammenhang mit der Erfindung beispielsweise Geräte, elektronische Geräte, elektronische Bauteile, elektronische Kommunikationsgeräte (z. B. ein Mobiltelefon), technische Anlagen, Gebäude oder technische Systeme verstanden werden, die insbesondere jeweils mindestens ein elektronisches Bauteil umfassen, dessen Zustand vorzugsweise durch einen Sensor erfassbar ist. Insbesondere ist dabei eine Zustandsänderung des Zustands des Objektes bzw. des elektronischen Bauteil des Objektes ebenfalls durch den Sensor erfassbar. Insbesondere kann sich die Zustandsänderung bzw. der Zustand auch auf nicht-elektronische Bauteile des Objektes beziehen. Dies kann beispielsweise eine Änderung einer Statik eines Gebäudes oder eine Verformung eines Metallteils (z. B. ein Rahmen) sein. Der Zustand bzw. die Zustandsänderung wird insbesondere rechnergestützt und/oder automatisiert erfasst und/oder mittels einer Schnittstelle dem Steuersystem bzw. dem verteilten Datenbanksystem bereitgestellt.

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems) oder die entsprechende Transaktion des verteilten Datenbanksystems) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem" erläutert ist.

Unter einem "Programmcode" (z. B. ein Smart-Contract) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems ausgeführt [4][5]. Dabei wird beispielsweise eine virtuelle Maschine durch die Infrastruktur des verteilten Datenbanksystems realisiert.

Unter einem "Smart Contract" kann im Zusammenhang mit der Erfindung beispielsweise ein ausführbarer Programmcode verstanden werden [4][5] (siehe insbesondere Definition "Programmcode"). Der Smart Contract ist vorzugsweise in einer Transaktion eines verteilten Datenbanksystems (z. B. eine Blockkette) gespeichert, beispielsweise in einem Datenblock des verteilten Datenbanksystems. Beispielsweise kann der Smart Contract auf die gleiche Weise ausgeführt werden, wie dies bei der Definition von "Programmcode", insbesondere im Zusammenhang mit der Erfindung, erläutert ist.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt/Inhalt einer bestimmten Transaktion zu lösen ist [1][4][5]. Eine solche rechenintensive Aufgabe wird beispielsweise auch als kryptographisches Puzzle bezeichnet.

Unter einem "verteilten Datenbanksystem", das beispielsweise auch als verteilte Datenbank bezeichnet werden kann, kann im Zusammenhang mit der Erfindung beispielsweise eine dezentral verteilte Datenbank, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder eine Kombination aus den genannten Implementierungsvarianten [6][7]. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1][4][5]. Unter einem "verteilten Datenbanksystem" kann beispielsweise auch ein verteiltes Datenbanksystem verstanden werden, von dem zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen miteinander über gerichtete Kanten miteinander verbunden. Dies bedeutet insbesondere, dass (alle) Kanten (immer) die gleiche Richtung haben, ähnlich wie dies z. B. bei Zeit ist. Mit anderen Worten ist es insbesondere nicht möglich rückwärts (also entgegen der gemeinsamen gleichen Richtung) die Transaktionen oder die Blöcke oder die Knoten des Graphen anzulaufen bzw. anzuspringen. Azyklisch bedeutet dabei insbesondere, dass es keine Schleifen bei einem Durchlaufen des Graphen gibt.

Bei dem verteilten Datenbanksystem kann es sich beispielsweise um ein öffentliches verteiltes Datenbanksystem (z. B. eine öffentliche Blockkette) oder ein geschlossenes (oder privates) verteiltes Datenbanksystem (z. B. eine private Blockkette) handeln.

Handelt es sich beispielsweise um ein öffentliches verteiltes Datenbanksystem, bedeutet dies, dass neue Knoten und/oder Geräte ohne Berechtigungsnachweise oder ohne Authentifizierung oder ohne Anmeldeinformationen oder ohne Credentials dem verteilten Datenbanksystem beitreten können bzw. von diesem akzeptiert werden. Insbesondere können in einem solchen Fall die Betreiber der Knoten und/oder Geräte anonym bleiben.

Handelt es sich bei dem verteilten Datenbanksystem beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem beitreten zu können bzw. um von diesem akzeptiert zu werden.

Bei einem verteilten Datenbanksystem kann es sich beispielsweise auch um ein verteiltes Kommunikationssystem zum Datenaustausch handeln. Dies kann beispielsweise ein Netzwerk oder ein Peer-2-Peer Netzwerk sein.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems (z. B. eine Blockkette oder eine Peer to Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Block-header), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1][4][5]. Bei einem Datenblock kann es sich beispielsweise auch nur um einen bestimmten Speicherbereich oder Adressbereich der Gesamtdaten handeln, die in dem verteilten Datenbanksystem gespeichert sind. Damit lassen sich beispielsweise blocklose (engl. blockless) verteilte Datenbanksysteme, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht.

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems" kann im Zusammenhang mit der Erfindung beispielsweise der Datenblock des verteilten Datenbanksystems verstanden werden, der insbesondere einem (bestimmten) Datenblock direkt vorhergeht. Alternativ können unter "vorhergehender Datenblöcke eines (bestimmten) Datenblockes des verteilten Datenbanksystems" insbesondere auch alle Datenblöcke des verteilten Datenbanksystems verstanden werden, die dem bestimmten Datenblock vorhergehen. Hierdurch kann beispielsweise die Verkettungsprüfsumme oder die Transaktionsprüfsumme insbesondere nur über den dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems" und dergleichen, können im Zusammenhang mit der Erfindung beispielsweise Geräte (z. B. Feldgeräte, Mobiltelefone), Rechner, Smart-Phones, Clients oder Teilnehmer verstanden werden, die Operationen (mit) dem verteilten Datenbanksystem (z. B. eine Blockkette) durchführen [1][4][5]. Solche Knoten können beispielsweise Transaktionen eines verteilten Datenbanksystems bzw. deren Datenblöcke ausführen oder neue Datenblöcke mit neuen Transaktionen in das verteilte Datenbanksystem mittels neuer Datenblöcke einfügen bzw. verketten. Insbesondere kann dieses Validieren und/oder Verketten durch einen vertrauenswürdigen Knoten (z. B. einen Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem, eine Knotenprüfsumme (z. B. eine digitale Signatur oder ein Zertifikat) in dem neuen Datenblock speichern. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems sind. Dabei können die Geräte beispielsweise Feldgeräte sein oder Geräte im Internet der Dinge sein, die insbesondere auch ein Knoten des verteilten Datenbanksystems sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die z. B. über ein Sicherheitsmodul verfügen, das beispielsweise mittels Software-Schutzmechanismen (z. B. kryptographische Verfahren), mechanische Schutzeinrichtungen (z. B. ein abschließbares Gehäuse) oder elektrische Schutzeinrichtungen verfügt (z. B. Tamper-Schutz oder ein Schutzsystem, das die Daten des Sicherheitsmoduls bei einer unzulässigen Nutzung/Behandlung des Blockketten-Orakel löscht umfasst). Das Sicherheitsmodul kann dabei beispielsweise kryptographische Schlüssel umfassen, die für die Berechnung der Prüfsummen (z. B. Transaktionsprüfsummen oder Knotenprüfsummen) notwendig sind.

Unter einem "Rechner" oder einem "Gerät" kann im Zusammenhang mit der Erfindung beispielsweise ein Computer(system), ein Client, ein Smart-Phone, ein Gerät oder ein Server, die jeweils außerhalb der Blockkette angeordnet sind bzw. kein Teilnehmer des verteilten Datenbanksystems (z. B. der Blockkette) sind (also keine Operationen mit dem verteilten Datenbanksystem durchführen oder diese nur abfragen, ohne jedoch Transaktionen durchzuführen, Datenblöcke einfügen oder Proof-of-Work-Nachweise berechnen), verstanden werden. Alternativ kann insbesondere auch unter einem Rechner ein Knoten des verteilten Datenbanksystems verstanden werden. Mit anderen Worten kann insbesondere unter einem Gerät ein Knoten des verteilten Datenbanksystems verstanden werden oder auch ein Gerät außerhalb der Blockkette bzw. des verteilten Datenbanksystems verstanden werden. Ein Gerät außerhalb des verteilten Datenbanksystems kann beispielsweise auf die Daten (z. B. Transaktionen oder Steuertransaktionen) des verteilten Datenbanksystems zugreifen und/oder von Knoten (z. B. mittels Smart-Contracts und/oder Blockketten-Orakel) angesteuert werden. Wird beispielsweise eine Ansteuerung bzw. Steuerung eines Gerätes (z. B. ein als Knoten ausgebildetes Gerät oder ein Gerät außerhalb des verteilten Datenbanksystems) durch einen Knoten realisiert, kann dies z. B. mittels eines Smart-Contracts erfolgen, der insbesondere in einer Transaktion des verteilten Datenbanksystems gespeichert ist.

Unter einer "vorgegebene Anzahl von Anfrageverarbeitungsknoten" und dergleichen ist insbesondere im Zusammenhang der Erfindung eine vorgegebene Anzahl von bestimmten Anfrageverarbeitungsknoten zu verstehen. Insbesondere entsprechenden die Empfänger der vorgegebenen Anzahl der Empfänger den Anfrageverarbeitungsknoten der vorgegebenen Anzahl der Anfrageverarbeitungsknoten.

Mit der Erfindung ist es insbesondere möglich eine dezentrale Infrastruktur zur rechnergestützten Steuerung einer Freigabe oder Bereitstellung von Ressourcen (z. B. Strom, Wasser, Rohmaterialen) zu ermöglichen. Mit der Erfindung kann insbesondere eine hohe Verfügbarkeit des Steuersystems erreicht werden, denn falls z. B. ein Teil des Steuersystems ausfällt können ggf. entsprechende Knoten (z. B. Anfrageverarbeitungsknoten) gewählt werden, die den Bereitstellungsanfragedatensatz bzw. die Bereitstellungsanfrage abarbeiten. Insbesondere können bei der Wahl der vorgegebenen Anzahl von Anfrageverarbeitungsknoten Knotenanforderungen berücksichtigt werden, um die objektspezifische Berechtigungsfreigabe zu berechnen. Hierdurch kann die objektspezifische Berechtigungsfreigabe beispielsweise optimiert werden, indem z. B. eine Berechnungszeit einer jeweiligen objektspezifischen Berechtigungsfreigabe verbessert wird (z. B. Berechnungszeit wird minimiert). Hierzu können beispielsweise bei der Wahl der Anfrageverarbeitungsknoten Knotenanforderungen vorgegeben sein, die z. B. vorgeben, dass eine entsprechende objektspezifische Berechtigungsfreigabe innerhalb einer vorgegebenen Zeit durch einen entsprechenden Anfrageverarbeitungsknoten berechnet wird. Das Steuersystem bestimmt dabei z. B. unter Berücksichtigung von Knoteneigenschaften, welche der Anfrageverarbeitungsknoten als Empfänger ausgewählt werden. Knoteneigenschaften können beispielsweise auch als gerätespezifische Anforderungen der Knoten bezeichnet werden.

Bei einer ersten Ausführungsform des Steuersystems umfassen die Senderinformationen eine digitale Signatur und/oder einen eindeutigen Identifizierer und/oder eine Senderadresse und/oder einen kryptographischen Schlüssel.

Das Steuersystem ist dahingehend vorteilhaft, um insbesondere eine Identität eines Senders präziser festzustellen. Beispielsweise können mittels kryptographischer Mittel (z. B. die digitale Signatur) der Bereitstellungsanfragedatensatz geschützt bzw. signiert sein, sodass dieser Schutz bzw. digitale Signatur anhand der Senderinformationen überprüfbar ist (z. B. kann der kryptographische Schlüssel ein öffentlicher Schlüssel sein mit dem die digitale Signatur überprüfbar ist).

Bei weiteren Ausführungsformen des Steuersystems ist der Sender das Gerät, das Objekt, ein Computerprogramm, eine Applikation oder ein neuronales Netzwerk.

Bei weiteren Ausführungsformen des Steuersystems sind die Ressourcen Energie und/oder Wasser und/oder Rohmaterialien und/oder Produkte und/oder Zahlungsmittel.

Bei weiteren Ausführungsformen des Steuersystems wird das Senden durch eine Zustandsänderung des Objektes gesteuert, die durch einen Sensor erfasst wird, wobei beispielsweise das Objekt den Sensor umfasst und/oder beispielsweise der Sender den Sensor umfasst.

Das Steuersystem ist dahingehend vorteilhaft, um insbesondere bei einem festgestellten Defekt des Objektes oder eines elektronischen Bauteils des Objektes das Senden zu automatisieren, wobei der Defekt beispielsweise durch die Zustandsänderung festgestellt wird. Beispielsweise kann beim Eintreten eines Display-Defektes (z. B. ist das Display das elektronische Bauteil) eines Mobiltelefones/Smart-Phones (das Objekt) dieser Defekt mittels des Sensors erfasst werden. Ist das Objekt (z. B. das Mobiltelefon/Smart-Phone) beispielsweise auch der Sender kann z. B. das Senden durch die Zustandsänderung gesteuert werden. Die Bereitstellungsanforderung bzw. der Bereitstellungsanfragedatensatz fordern z. B. dann als Ressource ein Ersatzteil (z. B. ein Ersatzdisplay) an. Das Steuersystem überprüft (z. B. mittels der Anfrageverarbeitungsknoten und/oder des Berechtigungssteuerungsmoduls) dabei beispielsweise, ob für das Objekt entsprechende Ersatzteile verfügbar sind und/oder ob der Sender zur Anforderung von Ersatzteilen berechtigt ist und/oder ob die Kosten für einen Austausch des Displays für den Sender als entrichtet gelten bzw. entrichtet sind. Hierzu können beispielsweise Daten aus einem/dem Registrierungsdatensatz herangezogen werden.

Bei weiteren Ausführungsformen des Steuersystems umfasst der objektspezifische Objektdatensatz einen eindeutigen Identifizierer des Objektes und/oder eine Zustandsänderung des Objektes und/oder ein Fertigungsdatum des Objektes und/oder einen Wert des Objektes und/oder Anschaffungskosten des Objektes und/oder einen Objektzustand des Objektes zu einem vorgegebenen Zeitpunkt und/oder einen Objekttyp und/oder einen Hersteller des Objektes. Alternativ oder zusätzlich umfasst der objektspezifische Objektdatensatz beispielsweise eine Adresse einer Datenquelle für weitere Informationen über das Objekt. Alternativ oder zusätzlich wird der Objektzustand zu einem vorgegebenen Zeitpunkt durch einen Sensor des Objektes ermittelt. Alternativ oder zusätzlich ist der vorgegebene Zeitpunkt der Zeitpunkt des Sendens des Bereitstellungsanfragedatensatzes oder der Zeitpunkt der Zustandsänderung.

Das Steuersystem ist dahingehend vorteilhaft, um insbesondere mittels der weiteren Datenquelle öffentlich zugängliche Daten beispielsweise für eine Ermittlung der Anzahl oder Menge der Ressource zu ermitteln, die z. B. freigegeben/bereitgestellt werden soll.

Bei weiteren Ausführungsformen des Steuersystems ist das Objekt ein mobiles Gerät, ein Feldgerät, ein Produkt, eine Gasturbine, ein Turbine, ein Windturbine oder ein Gerät, wobei die Zustandsänderung insbesondere eine Zustandsänderung einer Teilkomponente des Objektes ist und die Teilkomponente insbesondere ein elektronisches Bauteil des Objektes ist.

Bei weiteren Ausführungsformen des Steuersystems umfasst die Bereitstellungsanforderung eine Menge oder Anzahl der bereitzustellenden Ressource und/oder die Bereitstellungsanforderung umfasst ein Ziel oder eine Adresse, der die Ressource bereitgestellt werden soll.

Das Steuersystem ist dahingehend vorteilhaft, um insbesondere die Menge oder Anzahl der Ressource schnell festzustellen und beispielsweise die Übermittlung der Ressource rechnergestützt zu automatisieren, indem z. B. das Ziel für die Ressource bereits angegeben ist.

Bei weiteren Ausführungsformen des Steuersystems wird beim Prüfen des Senders eine Berechtigung des Senders überprüft.

Das Steuersystem ist dahingehend vorteilhaft, um insbesondere festzustellen ob der Sender überhaupt berechtigt ist eine Anfrage zu stellen. Dies kann beispielsweise hilfreich sein, um Denial-of-Service Angriffe zu unterbinden und/oder zu verhindern, dass Daten von nicht berechtigten Sendern im verteilten Datenbanksystem gespeichert werden.

Bei weiteren Ausführungsformen des Steuersystems wird eine Menge oder einer Anzahl der bereitzustellenden Ressource anhand des objektspezifischen Objektdatensatzes ermittelt.

Das Steuersystem ist dahingehend vorteilhaft, um insbesondere beispielsweise durch die Anfrageverarbeitungsknoten und/oder durch das Berechtigungssteuerungsmodul die Menge oder die Anzahl der bereitzustellenden Ressource rechnergestützt und/oder automatisiert zu berechnen. Hierzu können z. B. unterschiedliche Daten des objektspezifischen Objektdatensatzes verwendet werden. Beispielsweise können Geräteinformationen über das Objekt verwendet werden, z. B. Herstellertyp, Alter, Gerätetyp. Soll beispielsweise ein Austausch eines elektronischen Bauteils gesteuert werden, so kann beispielsweise das defekte bzw. auszutauschende elektronische Bauteil ebenfalls von den Daten umfasst sein.

Bei weiteren Ausführungsformen des Steuersystems umfasst das Steuersystem ein Registrierungsmodul zum Registrieren des Objektes mittels eines Registrierungsdatensatzes, wobei der Registrierungsdatensatz einen eindeutigen Identifizierer des Objektes und/oder ein Fertigungsdatum des Objektes und/oder einen Wert des Objektes und/oder Anschaffungskosten des Objektes und/oder einen Objektzustand des Objektes zu einem vorgegebenen Zeitpunkt und/oder einen Objekttyp und/oder einen Hersteller des Objektes und/oder ein zugelassener Sender für den Bereitstellungsanfragedatensatz umfasst. Alternativ oder zusätzlich wird beispielsweise der Objektzustand zu einem vorgegebenen Zeitpunkt durch einen Sensor des Objektes ermittelt (z. B. beim Registrieren und der Objektzustand ist im Registrierungsdatensatz gespeichert). Alternativ oder zusätzlich ist der vorgegebene Zeitpunkt ein Registrierungsdatum des Objektes beim Steuersystem. Alternativ oder zusätzlich wird insbesondere der Registrierungsdatensatz in einer oder mehreren Transaktionen des verteilten Datenbanksystems gespeichert.

Das Steuersystem ist dahingehend vorteilhaft, um insbesondere Informationen darüber festzulegen welche Ressource für welches Objekt ggf. bereitgestellt wird. Zusätzlich oder alternativ können beispielsweise Angaben oder Voraussetzungen mittels des Registrierungsdatensatzes festgelegt werden, die erfüllt sein müssen, um die entsprechenden Ressourcen freizugeben. Zusätzlich oder alternativ können beispielsweise Angaben oder Voraussetzungen oder Daten mittels des Registrierungsdatensatzes festgelegt werden, um die Anzahl oder die Menge der Ressource zu berechnen, die ggf. bereitgestellt werden soll. Das Registrierungsmodul kann beispielsweise ein integrales Modul des verteilten Datenbanksystems sein oder separat von diesem ausgebildet sein.

Bei weiteren Ausführungsformen des Steuersystems ist das verteilte Datenbanksystem eine Blockkette oder das verteilte Datenbanksystem ist ein Peer-2-Peer Datenbanksystem.

Bei weiteren Ausführungsformen des Steuersystems sind Datenblöcke des verteilten Datenbanksystems über eine kryptographische Hashfunktion (H) miteinander verkettet.

Gemäß einem weiteren Aspekt betrifft die Erfindung einen Sender aufweisend:

- ein erstes Kommunikationsmodul zum Senden eines Bereitstellungsanfragedatensatzes, wobei

    - der Bereitstellungsanfragedatensatz eine Bereitstellungsanforderung für eine einem Objekt zugeordneten Ressource umfasst,
    - der Bereitstellungsanfragedatensatz Senderinformationen des Senders des Bereitstellanfragedatensatzes umfasst,
    - der Bereitstellungsanfragedatensatz einen objektspezifischen Objektdatensatz für das Objekt umfasst.

Gemäß einem weiteren Aspekt betrifft die Erfindung ein verteiltes Datenbanksystem aufweisend:

- eine Vielzahl von Knoten, wobei die Knoten über ein erstes Kommunikationsnetzwerk miteinander verbunden sind;
- zweites Kommunikationsmodul zum Empfangen eines Bereitstellungsanfragedatensatzes, wobei

    - der Bereitstellungsanfragedatensatz eine Bereitstellungsanforderung für eine einem Objekt zugeordneten Ressource umfasst,
    - der Bereitstellungsanfragedatensatz Senderinformationen des Senders des Bereitstellanfragedatensatzes umfasst,
    - der Bereitstellungsanfragedatensatz einen objektspezifischen Objektdatensatz für das Objekt umfasst;

- ein erstes Überprüfungsmodul zum Überprüfen des Senders anhand der Senderinformationen, wobei das erste Überprüfungsmodul ein entsprechendes Senderprüfergebnis bereitstellt;
- ein erstes Speichermodul zum Speichern des Bereitstellungsanfragedatensatzes mit dem entsprechenden Senderprüfergebnis in einer Anfragetransaktion, wobei

- die Anfragetransaktion mittels des verteilten Datenbanksystems gespeichert wird,
- die Anfragetransaktion mittels des verteilten Datenbanksystems an eine vorgegebene Anzahl von Empfängern übermittelt wird,
- die vorgegebene Anzahl von Empfängern anhand des Senderprüfergebnis und/oder der Senderinformationen und/oder des objektspezifischen Objektdatensatzes ermittelt wird;

- eine vorgegebene Anzahl von Anfrageverarbeitungsknoten, wobei

  - die vorgegebene Anzahl von Anfrageverarbeitungsknoten die vorgegebene Anzahl von Empfängern ist,
  - jeweils die Anfrageverarbeitungsknoten eine objektspezifische Berechtigungsfreigabe anhand der Bereitstellungsanforderung, des objektspezifischen Objektdatensatzes und der Senderinformation ermittelt,
  - beispielsweise die jeweiligen objektspezifischen Berechtigungsfreigaben in Transaktionen des verteilten Datenbanksystems gespeichert werden;

- ein Berechtigungssteuerungsmodul zum Ermitteln einer Gesamtberechtigungsfreigabe der dem Objekt zugeordneten Ressource, wobei

  - zum Ermitteln der Gesamtberechtigungsfreigabe die jeweiligen objektspezifischen Berechtigungsfreigaben der jeweiligen Anfrageverarbeitungsknoten berücksichtigt werden;
  - beispielsweise die Gesamtberechtigungsfreigabe in Transaktionen des verteilten Datenbanksystems gespeichert werden;

- ein Ressourcenfreigabemodul, wobei

  - mittels der Gesamtberechtigungsfreigabe ein Bereitstellen der dem Objekt zugeordneten Ressource gesteuert wird.

Gemäß einem weiteren Aspekt betrifft die Erfindung ein (computerimplementiertes) Verfahren zum rechnergestützten Steuern einer Bereitstellung von Ressourcen mit folgenden Verfahrensschritten:

- Senden eines Bereitstellungsanfragedatensatzes mittels eines ersten Kommunikationsmoduls, wobei

  - der Bereitstellungsanfragedatensatz eine Bereitstellungsanforderung für eine einem Objekt zugeordneten Ressource umfasst,
  - der Bereitstellungsanfragedatensatz Senderinformationen des Senders des Bereitstellanfragedatensatzes umfasst,
  - der Bereitstellungsanfragedatensatz einen objektspezifischen Objektdatensatz für das Objekt umfasst;

- Empfangen des Bereitstellungsanfragedatensatzes;
- Überprüfen des Senders anhand der Senderinformationen, wobei das erste Überprüfungsmodul ein entsprechendes Senderprüfergebnis bereitstellt;
- Speichern des Bereitstellungsanfragedatensatzes mit dem entsprechenden Senderprüfergebnis in einer Anfragetransaktion, wobei

  - die Anfragetransaktion mittels des verteilten Datenbanksystems gespeichert wird,
  - die Anfragetransaktion mittels des verteilten Datenbanksystems an eine vorgegebene Anzahl von Empfängern übermittelt,
  - das verteilte Datenbanksystem eine Vielzahl von Knoten aufweist, die über ein erstes Kommunikationsnetzwerk miteinander verbunden sind,
  - die vorgegebene Anzahl von Empfängern anhand des Senderprüfergebnis und/oder der Senderinformationen und/oder des objektspezifischen Objektdatensatzes ermittelt wird;

    - Ermitteln einer objektspezifischen Berechtigungsfreigabe anhand der Bereitstellungsanforderung, des objektspezifischen Objektdatensatzes und der Senderinformation mittels einer vorgegebenen Anzahl von Anfrageverarbeitungsknoten, wobei

  - die vorgegebene Anzahl von Anfrageverarbeitungsknoten die vorgegebene Anzahl von Empfängern ist,
  - beispielsweise die jeweiligen objektspezifischen Berechtigungsfreigaben in Transaktionen des verteilten Datenbanksystems gespeichert werden;

- Ermitteln einer Gesamtberechtigungsfreigabe der dem Objekt zugeordneten Ressource, wobei

  - zum Ermitteln der Gesamtberechtigungsfreigabe die jeweiligen objektspezifischen Berechtigungsfreigaben der jeweiligen Anfrageverarbeitungsknoten berücksichtigt werden;
  - beispielsweise die Gesamtberechtigungsfreigabe in Transaktionen des verteilten Datenbanksystems gespeichert werden;

- Steuern eines Bereitstellens der dem Objekt zugeordneten Ressource mittels der Gesamtberechtigungsfreigabe.

Bei weiteren Ausführungsformen des Verfahrens umfasst das Verfahren weitere Verfahrensschritte, um die funktionalen Merkmale oder um weitere Merkmale des Steuersystems zu realisieren.

Gemäß einem weiteren Aspekt betrifft die Erfindung ein (computerimplementiertes) Verfahren zum rechnergestützten Senden eines Bereitstellungsanfragedatensatzes mit folgenden Verfahrensschritten:

- Senden eines Bereitstellungsanfragedatensatzes mittels eines ersten Kommunikationsmoduls, wobei

  - der Bereitstellungsanfragedatensatz eine Bereitstellungsanforderung für eine einem Objekt zugeordneten Ressource umfasst,
  - der Bereitstellungsanfragedatensatz Senderinformationen des Senders des Bereitstellanfragedatensatzes umfasst,
  - der Bereitstellungsanfragedatensatz einen objektspezifischen Objektdatensatz für das Objekt umfasst.

Bei weiteren Ausführungsformen des Verfahrens umfasst das Verfahren weitere Verfahrensschritte, um die funktionalen Merkmale oder um weitere Merkmale des Senders zu realisieren.

Gemäß einem weiteren Aspekt betrifft die Erfindung ein (computerimplementiertes) Verfahren zum rechnergestützten Steuern einer Bereitstellung von Ressourcen mit folgenden Verfahrensschritten:

- Empfangen des Bereitstellungsanfragedatensatzes, wobei

  - der Bereitstellungsanfragedatensatz eine Bereitstellungsanforderung für eine einem Objekt zugeordneten Ressource umfasst,
  - der Bereitstellungsanfragedatensatz Senderinformationen des Senders des Bereitstellanfragedatensatzes umfasst,
  - der Bereitstellungsanfragedatensatz einen objektspezifischen Objektdatensatz für das Objekt umfasst;

- Überprüfen des Senders anhand der Senderinformationen, wobei das erste Überprüfungsmodul ein entsprechendes Senderprüfergebnis bereitstellt;
- Speichern des Bereitstellungsanfragedatensatzes mit dem entsprechenden Senderprüfergebnis in einer Anfragetransaktion, wobei

  - die Anfragetransaktion mittels des verteilten Datenbanksystems gespeichert wird,
  - die Anfragetransaktion mittels des verteilten Datenbanksystems an eine vorgegebene Anzahl von Empfängern übermittelt,
  - das verteilte Datenbanksystem eine Vielzahl von Knoten aufweist, die über ein erstes Kommunikationsnetzwerk miteinander verbunden sind,
  - die vorgegebene Anzahl von Empfängern anhand des Senderprüfergebnis und/oder der Senderinformationen und/oder des objektspezifischen Objektdatensatzes ermittelt wird;

- Ermitteln einer objektspezifischen Berechtigungsfreigabe anhand der Bereitstellungsanforderung, des objektspezifischen Objektdatensatzes und der Senderinformation mittels einer vorgegebenen Anzahl von Anfrageverarbeitungsknoten, wobei

  - die vorgegebene Anzahl von Anfrageverarbeitungsknoten die vorgegebene Anzahl von Empfängern ist,
  - beispielsweise die jeweiligen objektspezifischen Berechtigungsfreigaben in Transaktionen des verteilten Datenbanksystems gespeichert werden;

- Ermitteln einer Gesamtberechtigungsfreigabe der dem Objekt zugeordneten Ressource, wobei

  - zum Ermitteln der Gesamtberechtigungsfreigabe die jeweiligen objektspezifischen Berechtigungsfreigaben der jeweiligen Anfrageverarbeitungsknoten berücksichtigt werden;
  - beispielsweise die Gesamtberechtigungsfreigabe in Transaktionen des verteilten Datenbanksystems gespeichert werden;

- Steuern eines Bereitstellens der dem Objekt zugeordneten Ressource mittels der Gesamtberechtigungsfreigabe.

Bei weiteren Ausführungsformen des Verfahrens umfasst das Verfahren weitere Verfahrensschritte, um die funktionalen Merkmale oder um weitere Merkmale des verteilten Datenbanksystems zu realisieren.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass das genannte erfindungsgemäße, verteilte Datenbanksystem und/oder der Sender und/oder das Steuersystem erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es das erfindungsgemäße verteilte Datenbanksystem und/oder den Sender und/oder das Steuersystem erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:

Fig. 1    ein erstes Ausführungsbeispiel der Erfindung;

Fig. 2    ein weiteres Ausführungsbeispiel der Erfindung;

Fig. 3    ein weiteres Ausführungsbeispiel der Erfindung;

Fig. 4    ein weiteres Ausführungsbeispiel der Erfindung;

Fig. 5    ein weiteres Ausführungsbeispiel der Erfindung; und

Fig. 6    ein weiteres Ausführungsbeispiel der Erfindung.

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

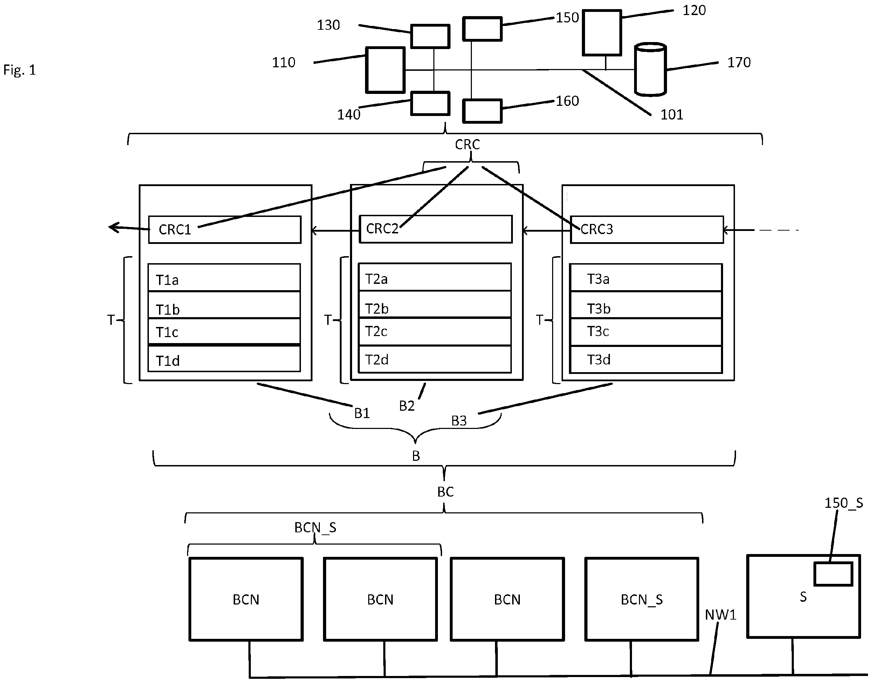

Die Fig. 1 zeigt ein erstes Ausführungsbeispiel der Erfindung. Fig. 1 zeigt dabei ein Steuersystem zum Steuern und/oder Überwachen von Geräten, wobei das verteilte Datenbanksystem beispielsweise mittels einer Blockkette BC realisiert wird.

Im Einzelnen zeigt die Fig. 1 Blöcke B, beispielsweise einen ersten Block B1, einen zweiten Block B2 und einen dritten Block B3, einer Blockkette BC, wobei hier insbesondere ein Ausschnitt der Blockkette BC exemplarisch gezeigt ist.

Die Blöcke B umfassen jeweils mehrere Transaktionen T. Die Transaktionen T können dabei Steuertransaktionen und/oder Bestätigungstransaktionen umfassen.

Der erste Block B1 umfasst beispielsweise eine erste Transaktion T1a, eine zweite Transaktion T1b, eine dritte Transaktion T1c und eine vierte Transaktion T1d.

Der zweite Block B2 umfasst beispielsweise eine fünfte Transaktion T2a, eine sechste Transaktion T2b, eine siebte Transaktion T2c und eine achte Transaktion T2d.

Der dritte Block B3 umfasst beispielsweise eine neunte Transaktion T3a, eine zehnte Transaktion T3b, eine elfte Transaktion T3c und eine zwölfte Transaktion T3d.

Die Blöcke B umfassen jeweils zusätzlich noch eine der Verkettungsprüfsummen CRC, die abhängig vom direkten Vorgänger-Block gebildet wird. Somit umfasst der erste Block B1 eine erste Verkettungsprüfsumme CRC1 von seinem Vorgänger-Block, der zweite Block B2 eine zweite Verkettungsprüfsumme CRC2 vom ersten Block B1, und der dritte Block B3 eine dritte Verkettungsprüfsumme CRC3 vom zweiten Block B2.

Die jeweilige Verkettungsprüfsumme CRC1, CRC2, CRC3 wird vorzugsweise über den Block-Header des entsprechenden Vorgängerblockes gebildet. Die Verkettungsprüfsummen CRC können vorzugsweise unter Verwendung einer kryptographischen HashFunktion wie z.B. SHA-256, KECCAK-256 oder SHA-3 gebildet werden. Beispielsweise kann die Verkettungsprüfsumme zusätzlich über die Datenblockprüfsumme berechnet werden oder der Header umfasst die Datenblockprüfsumme (die Datenblockprüfsumme ist im Nachgang erläutert).

Zusätzlich kann jeder der Blöcke eine Datenblockprüfsumme umfassen. Diese kann beispielsweise mittels eines Hash-Baumes realisiert werden.

Um den Hash-Baum zu bilden, wird für jede Transaktion eines Daten(blockes) eine Transaktionsprüfsumme (z. B. ebenfalls ein Hash-Wert) berechnet. Alternativ oder zusätzlich kann eine Transaktionsprüfsumme, die vom Erzeuger der Transaktion vorzugsweise beim Erzeugen der Transaktion erstellt wurde, hierfür weiterverwendet werden.

Üblicherweise wird für einen Hash-Baum, z. B. ein Merkle Tree oder Patricia Tree, verwendet, dessen Wurzel-Hash-Wert/Wurzel-Prüfsumme vorzugsweise als entsprechende Datenblockprüfsumme in den jeweiligen Blöcken hinterlegt wird.

In einer Variante wird die Datenblockprüfsumme als Verkettungsprüfsumme verwendet.

Ein Block kann weiterhin einen Zeitstempel, eine digitale Signatur, einen Proof-of-Work-Nachweis aufweisen, so wie es in den Ausführungsformen der Erfindung erläutert wurde.

Die Blockkette BC selbst wird durch eine Blockketten-Infrastruktur mit mehreren Blockketten-Knoten BCN, BCN_D realisiert. Bei den Knoten kann es sich beispielsweise um Rechner, Blockkettenorakel, vertrauenswürdige Knoten oder um eines oder mehrere oder alle der Geräte handeln, die gesteuert bzw. überwacht werden sollen. Mit anderen Worten können insbesondere die Geräte entweder als Blockkettenknoten ausgebildet sein, die dann beispielsweise als Geräteknoten BCN_D bezeichnet werden. Geräte, die beispielsweise nicht als Blockkettenknoten ausgebildet sind und beispielsweise nur lesend auf die Blockkette zugreifen, werden insbesondere als blockkettenexterne Geräte D bezeichnet. Die Knoten sind über ein erstes Netzwerk NW1 (z. B. ein Kommunikationsnetzwerk wie das Internet oder ein Ethernet-Netzwerk) miteinander kommunikativ verbunden. Mittels der Blockketten-Infrastruktur werden beispielsweise zumindest ein Teil der Datenblöcke B oder alle Datenblöcke B der Blockkette BC für einen Teil oder alle Knoten der Blockkette repliziert.

Insbesondere können unter Geräten blockkettenexterne Geräte D verstanden werden oder Geräteknoten BCN_D verstanden werden.

Das Steuersystem umfasst einen Sender S mit einem ersten Kommunikationsmodul 150_S und ein verteiltes Datenbanksystems (z. B. die Blockkette BC). Die Blockkette BC umfasst ein erstes Überprüfungsmodul 110, ein erstes Speichermodul 120, ein Berechtigungssteuerungsmodul 130, ein Ressourcenfreigabemodul 140, ein optionales Registrierungsmodul 170 und ein zweites Kommunikationsmodul 150, die über das Steuersystem (z. B. einen Bus 101) oder über die Blockkette und deren Infrastruktur kommunikativ miteinander verbunden sind (z. B. das erste Netzwerk NW1). Der Sender S kann beispielsweise ebenfalls über das Steuersystem oder über die Blockkette und deren Infrastruktur kommunikativ mit dem verteilten Datenbanksystem verbunden sein. Das erste (Kommunikations-)Netzwerk NW1 kann dabei ein Mobilfunknetzwerk, ein Ethernet-Netzwerk, ein WAN, ein LAN oder das Internet sein. Die Blockkette BC umfasst zudem eine Vielzahl von Knoten BCN, wobei ebenfalls eine vorgegebene Anzahl von Anfrageverarbeitungsknoten BCN_S gezeigt ist.

Der Sender S ist zum Senden eines Bereitstellungsanfragedatensatzes mittels eines ersten Kommunikationsmoduls eingerichtet, wobei der Bereitstellungsanfragedatensatz eine Bereitstellungsanforderung für eine einem Objekt zugeordneten Ressource umfasst. Der Bereitstellungsanfragedatensatz umfasst Senderinformationen des Senders und umfasst einen objektspezifischen Objektdatensatz für das Objekt. Der Sender S und/oder das Objekt wurden beispielsweise im Steuersystem zu einem ersten Zeitpunkt mittels eines Registrierungsdatensatzes registriert. Das Senden erfolgt zu einem zweiten Zeitpunkt, der nach dem ersten Zeitpunkt liegt.

Der Sender S kann in einem einfachen Beispiel ein Smart-Phone sein, bei dem ein elektronisches Bauteil (z. B. das Display des Smart-Phones) mittels eines Sensors überwacht wird. Der Sender S und das Objekt sind in diesem Beispiel identisch, können aber auch verschieden voneinander sein. Zunächst wird beispielsweise zu dem ersten Zeitpunkt der Sender S mittels des Registrierungsmoduls 170 registriert, indem beispielsweise der Registrierungsdatensatz für den Sender S oder das Objekt in einer Transaktion des verteilten Datenbanksystems gespeichert wird. Der Registrierungsdatensatz umfasst beispielsweise auch Senderinformationen oder einen Teil der Senderinformationen. Der Registrierungsdatensatz umfasst beispielsweise auch den objektspezifischen Objektdatensatz oder einen Teil des Objektdatensatzes.

Die Senderinformationen sind vorzugsweise Informationen über den Sender (z. B. eine Entität), welche den Sender z. B. gegenüber dem Steuersystem eindeutig über die gesamte operative Laufzeit des Steuersystems identifizierbar macht. Die Senderinformationen umfassen hierzu beispielsweise eine eindeutige Identifikation, die aus Eigenschaften des Senders gebildet werden. Dazu werden beispielsweise entsprechend des Typs des Senders spezifische Eigenschaften herangezogen. Im Falle eines menschlichen Benutzers sind dies Namen, Geburtsdatum, Postleitzahl und biometrische Daten wie ein Fingerabdruck und Iris. Im Falle von Computerprogrammen, Apps oder Geräten können beispielsweise kryptographische Daten für diese Sender bereitgestellt oder gebildet werden. Hierzu können Credentials/kryptographisches Schlüsselmaterial (z. B. digitale Signaturen, Passwörter etc.) aus einer sicheren Speichereinheit ausgelesen und übermittelt/bereitgestellt werden oder es werden kryptographische Prüfsummen für das Computerprogramm oder über Teile eines Betriebssystem des Gerätes gebildet und übermittelt/bereitgestellt. Auch können die Daten eines menschlichen Benutzers in einer (sicheren) Speichereinheit gespeichert sein und durch das Gerät und/oder Computerprogramm übermittelt/bereitgestellt werden. Dies erfolgt vorzugsweise automatisiert. Beim Übermitteln/Bereitstellen werden die entsprechenden Daten in dem Registrierungsdatensatz gespeichert und an das Steuersystem bzw. das verteilte Datenbanksystem übermittelt. Eine solche Registrierungsanfrage wird dann beispielsweise durch das Registrierungsmodul 170 geprüft (z. B. sind alle notwendigen Daten für eine Registrierung vorhanden). Abhängig von Ergebnis des Überprüfens kann dann der Registrierungsdatensatz in den Transaktionen des verteilten Datenbanksystems gespeichert werden. Vorzugsweise wenn das Überprüfen erfolgreich ist, wird der Registrierungsdatensatz gespeichert und der Sender erhält einen Bestätigungsdatensatz, der beispielsweise eine Lizenz oder kryptographische Schlüssel umfassen, die die erfolgreiche Registrierung bestätigen.

In einer Variante können Computerprogramme oder APPs durch das Steuersystem bereitgestellt werden. Diese Computerprogramme umfassen z. B. die Daten für einen menschlichen Benutzer, mit dem Unterscheid, das diese z. B. im Programm oder der APP zusammen mit der Lizenz gespeichert sind.

Sendertypen sind beispielsweise neuronale Netzwerke, mobile Geräte, Industrieanlagen, Menschen, Computerprogramme oder Apps.

Der objektspezifische Objektdatensatz, den z. B. der Registrierungsdatensatz umfasst bzw. speichert, umfasst z. B. die entsprechenden Informationen des Gerätetyps über ein Gerät/Sender (z. B. das Smart-Phone), damit das Gerät eindeutig referenziert und über die gesamte operative Laufzeit des Steuersystems bei Bedarf identifiziert werden kann.

Der Objektdatensatz umfasst beispielsweise bei einer Geräteklasse Smartphone die IMEI Nummer, Hersteller, Typ, Kaufdatum und ein Nachweis des korrekten Zustandes, die über eine im Vorfeld zu installierende APP (z. B. ein/das Computerprogramm, das vorzugsweise vom Steuersystem bereitgestellt wurde) erfolgt.

Diese APP prüft z. B. anhand der im Smartphone vorhanden Sensoren und Funktionen, ob das Gerät einwandfrei funktioniert, insbesondere ob bei dem Gerät ein Glasbruch beim Display vorliegt. Wird nun beispielsweise eine Zustandsänderung für das Display mittels der Sensoren erkannt (z. B. das Display ist defekt oder gebrochen), wird - wie oben erläutert - der Bereitstellungsanfragedatensatz vom Smart-Phone gesendet.

In einer weiteren Variante wird bei der Registrierung anhand dieser Daten (z. B. anhand der Daten des Registrierungsdatensatzes bzw. des objektspezifischen Objektdatensatzes) anhand von diesen Daten bzw. Objektdaten eine Anzahl oder eine Menge der Ressource berechnet, die ggf. bei einer Bereitstellungsanforderung bzw. beim Empfang des Bereitstellungsanfragedatensatz bereitgestellt werden soll. Die Berechnung erfolgt beispielsweise anhand historischer Daten des Steuersystems und/oder historischer Daten über das Objekt und/oder Daten aus öffentlich zugänglichen Quellen und wird im Steuersystem hinterlegt bzw. in einer Transaktion des verteilten Datenbanksystems gespeichert. Diese Transaktion umfasst vorzugsweise ebenfalls den Registrierungsdatensatz. Insbesondere werden die öffentlich zugänglichen Quellen anhand der Daten des objektspezifischen Objektdatensatzes ermittelt. Die Berechnung wird vorzugsweise von einem Berechnungsmodul des Steuersystems und/oder des verteilten Datenbanksystems durchgeführt, wobei das Berechnungsmodul vorzugsweise Schnittstellen umfasst, um ggf. auf die hierfür notwendigen Daten(-Quellen) (z. B. öffentliche Datenquellen, das verteilte Datenbanksystem) zuzugreifen.

Dieser Wert (also die Anzahl oder die Menge der Ressource) wird als Ressource dem Objekt im Steuersystem fest zugeordnet und unterliegt ab diesem Zweitpunkt einem Aging/Alterungs-Mechanismus, basierend auf den periodisch aktualisierten Werten für das Objekt. Fest zuordnen bedeutet dabei insbesondere, dass dieser Wert (also die Anzahl oder die Menge der Ressource) in einer Transaktion des verteilten Datenbanksystems gespeichert wird. Diese Transaktion umfasst vorzugsweise ebenfalls den Registrierungsdatensatz. Wird der Registrierungsdatensatz beispielsweise in einer Transaktion des verteilten Datenbanksystems gespeichert, kann es sich bei dem Registrierungsdatensatz bzw. der entsprechenden Transaktion um vorausgesetzte oder vorausgeführte Steuerbefehle oder vorausgesetzte/vorausgeführte Steuertransaktionen handeln, die z. B. ausgeführt sein müssen, um einen Bereitstellungsanfragedatensatz zu verarbeiten oder zu akzeptieren.

Insbesondere berücksichtigt der Aging/Alterungs-Mechanismus einen Ressourcenverlust (in Anzahl oder Menge) für das Objekt in Abhängigkeit des Herstellungsdatums, ursprünglicher Ressourcen(-Wert), und dem aktuellen statistisch gemittelten Wert aus öffentlichen zugänglichen Quellen und der Häufigkeit aufgetretener Schäden. Dieser Wert dient allen Sendern und/oder Steuersystemen als Grundlage für einen möglichen Wertetausch und Risikoabsicherung.

Insbesondere wird der Ressourcenverlust und/oder die Anzahl und/oder die Menge der freizugebenden Ressource für das Objekt für andere Objekte weiterverwendet. Beispielsweise kann die Berechnung des Ressourcenverlusts und/oder der Anzahl und/oder der Menge der freizugebenden Ressource für das Objekt beschleunigt werden, wenn für ein gleichartiges oder gleichwertiges Objekt bereits schon einmal diese Werte ermittelt wurden. Bei einer Werte-Ermittlung kann beispielsweise das Berechnungsmodul überprüfen, ob für ein gleichartiges oder gleichwertiges Objekt (z. B. ein Smart-Phone eines bestimmten Typs) bereits schon einmal diese Werte ermittelt wurden. Ist dies der Fall, müssen die entsprechenden Werte nicht neu ermittelt werden, sondern können einfach übernommen werden. Gibt es entsprechende Werte noch nicht, können diese - wie oben erläutert - ermittelt werden und gespeichert werden (z. B. in Transaktionen des verteilten Datenbanksystems) und für ein Objekt, für das diese Werte zu einem späteren Zeitpunkt zu ermitteln sind, wiederverwendet werden.

Wenn die Registrierung des Objektes und/oder des Senders erfolgreich durchgeführt werden konnte, können beispielsweise Zustandsänderungen des Objektes als Bereitstellungsanfragen (die z. B. im Bereitstellungsanfragedatensatz gespeichert sind) an das Steuersystem bzw. an das verteilte Datenbanksystem gerichtet werden. Diese Zustandsänderungen können zum Beispiel Beschädigungen oder Fehlfunktionen des registrierten Gerätes sein.

Diese Bereitstellungsanfragen/Bereitstellungsanfragedatensätze können beispielsweise durch einen Smart Contract/ausführbaren Programmcode verarbeitet werden. Der Smart Contract vergleicht z. B. die während dieser Bereitstellungsanfrage übermittelten Daten über Sender (z. B. Entität), Objekt (z. B. Smart-Phone) und Zustandsänderung des Objektes (z. B. Bruch des Displays) mit den im Steuersystem bzw. im verteilten Datenbanksystem hinterlegten Daten.

Ein Senden eines Bereitstellungsanfragedatensatzes, das durch eine Zustandsänderung gesteuert wird, umfasst beispielsweise die Informationen über die Zustandsänderung. Diese Informationen über die Zustandsänderung sind z. B. Datum des Eintritts der Zustandsänderung, und einen Nachweis wie zum Beispiel Dokument, Foto oder 3rd Party Bestätigung. Mittels dieser Informationen über die Zustandsänderung kann das Steuersystem ermitteln, ob die entsprechenden Ressourcen freigegeben werden. Diese Zustandsänderung wird beispielsweise durch eine Transaktion als verkettete Blockkette oder im verteilten Datenbanksystem gespeichert. Der objektspezifische Objektdatensatz des Bereitstellungsanfragedatensatzes umfasst vorzugsweise die Informationen über die Zustandsänderung.

Das zweite Kommunikationsmodul 150 der Blockkette BC ist zum Empfangen des Bereitstellungsanfragedatensatzes eingerichtet. Das zweite Kommunikationsmodul 150 (wie auch das erste Kommunikationsmodul 150 S) kann beispielsweise eine Netzwerkkarte, eine Netzwerkschnittstelle oder ein W-Lan-Modul sein.

Das erste Überprüfungsmodul ist zum Überprüfen des Senders anhand der Senderinformationen eingerichtet, wobei das erste Überprüfungsmodul ein entsprechendes Senderprüfergebnis bereitstellt. Das Überprüfen kann beispielsweise anhand des Registrierungsdatensatzes erfolgen, um festzustellen ob der entsprechende Sender registriert ist und dieser berechtigt ist entsprechende Anfragen zu stellen. Hierzu kann das Registrierungsmodul überprüfen, ob für einen entsprechenden Sender bzw. seine Senderinformationen und/oder für das Objekt bzw. für den Objektdatensatz ein zugehöriger Registrierungsdatensatz vorhanden ist. Sind die Registrierungsdatensätze beispielsweise im verteilten Datenbanksystem gespeichert können diese Daten direkt vom verteilten Datenbanksystem abgerufen werden. Beispielsweise kann der zugehörige Registrierungsdatensatz anhand eines eindeutigen Identifizierers für den Sender und/oder das Objekt geladen werden, wobei die entsprechenden Identifizierer bei der Registrierung beispielsweise mittels der Senderinformationen und/oder des objektspezifischen Objektdatensatzes entsprechend hinterlegt bzw. gespeichert wurden. Umfassen die Senderinformationen einen entsprechenden eindeutigen Identifizierer und/oder der objektspezifische Datensatz einen entsprechenden eindeutigen Identifizierer, der/die mit dem/den entsprechenden Identifizierern des Registrierungsdatensatzes übereinstimmt, wird der Bereitstellungsanfragedatensatz weiterverarbeitet. Mit anderen Worten wird insbesondere der Bereitstellungsanfragedatensatz durch das verteilte Datenbanksystem weiterverarbeitet, wenn die Senderinformationen und/oder der objektspezifische Objektdatensatz des Bereitstellungsanfragedatensatz zumindest teilweise mit den Senderinformationen und/oder dem objektspezifischen Objektdatensatz des Registrierungsdatensatzes übereinstimmt (z. B. indem die entsprechenden eindeutigen Identifizierer übereinstimmen).

In einer Variante werden Bereitstellungsanfragen, die nicht erfolgreich durchgeführt werden können (zum Beispiel aufgrund von fehlerhaften Eingaben), nach dem dritten Senden bzw. Empfangen zeitverzögert nach folgendem Algorithmus akzeptiert:

$T_n = T_{n-1} \times n$ mit für $T_4 = 5$ Sekunden, $T_{0-3} = 0$ Sekunden.

Dabei ist T die Zeitverzögerung und n gibt die Anzahl der Versuche eine Bereitstellungsanfrage zu senden an.

Das erste Speichermodul ist zum Speichern des Bereitstellungsanfragedatensatzes mit dem entsprechenden Senderprüfergebnis in einer Anfragetransaktion (dies ist z. B. eine Transaktion, die die entsprechenden Daten umfasst) eingerichtet. Dabei wird die Anfragetransaktion mittels des verteilten Datenbanksystems gespeichert (z. B. wird die Anfragetransaktion durch die Blockkette validiert und/oder in einem Block der Blockkette gespeichert - z. B. wird diese nach dem Validieren gespeichert). Der Bereitstellungsanfragedatensatz mit der Bereitstellungsanforderung kann beispielsweise auch als ein Steuerdatensatz bezeichnet werden, wobei die Bereitstellungsanforderung Steuerbefehle sind.

Die Anfragetransaktion wird mittels des verteilten Datenbanksystems an eine vorgegebene Anzahl von Empfängern übermittelt.

Dabei wird die vorgegebene Anzahl von Empfängern anhand des Senderprüfergebnis und/oder der Senderinformationen und/oder des objektspezifischen Objektdatensatzes und/oder des Bereitstellungsanfragedatensatzes ermittelt. Im Einzelnen wird anhand der genannten Informationen bzw. einer Kombination der genannten Informationen bestimmt, welche Knoten des verteilten Datenbanksystems oder welche Geräte (z. B. Geräte, die keine Knoten der Blockkette bzw. des verteilten Datenbanksystems sind) als Anfrageverarbeitungsknoten BCN_S ausgewählt werden. Insbesondere werden unter Anfrageverarbeitungsknoten Knoten oder Geräte verstanden, die ein Knoten des verteilten Datenbanksystems sind (interne Knoten), oder ein Gerät/Knoten, der extern von dem verteilten Datenbanksystem ist. Solche externen Knoten können beispielsweise über eine Schnittstelle auf das verteilte Datenbanksystem zugreifen.

Insbesondere können bei der Wahl der vorgegebenen Anzahl von Anfrageverarbeitungsknoten (z. B. externen Knoten und/oder interne Knoten) Knotenanforderungen berücksichtigt werden, um die objektspezifische Berechtigungsfreigabe zu berechnen. Hierdurch kann die objektspezifische Berechtigungsfreigabe beispielsweise optimiert werden, indem z. B. eine Berechnungszeit einer jeweiligen objektspezifischen Berechtigungsfreigabe verbessert wird (z. B. Berechnungszeit wird minimiert). Hierzu können beispielsweise bei der Wahl der Anfrageverarbeitungsknoten die Knotenanforderungen derart vorgegeben sein, dass eine entsprechende objektspezifische Berechtigungsfreigabe innerhalb einer vorgegebenen Zeit durch einen entsprechenden Anfrageverarbeitungsknoten berechnet wird. Das Steuersystem bestimmt dabei z. B. unter Berücksichtigung von Knoteneigenschaften, welche der Anfrageverarbeitungsknoten als Empfänger ausgewählt werden. Alternativ oder zusätzlich können Knotenanforderungen beispielsweise sein, dass ein entsprechender Knoten über Schutzmechanismen (z. B. Daten sind vor dem Zugriff von Unbefugten geschützt beispielsweise mittels Passwörtern oder Nutzerauthentisierung) verfügt, um beispielsweise Datenschutzrichtlinien zu erfüllen, und/oder ein entsprechender Knoten ortsbezogene Anforderungen erfüllt (z. B. dürfen die Knoten nur innerhalb von Deutschland liegen).

Um die entsprechenden Knoten (z. B. externen Knoten und/oder interne Knoten) und deren Anzahl zu bestimmten, kann das verteilte Datenbanksystem bzw. das Steuersystem ein Bestimmungsmodul umfassen, bei dem die entsprechenden Daten der Knoten (z. B. ortbezogene Position der Knoten, Berechnungsgeschwindigkeit, Schutzmechanismen) hinterlegt sind. Vorzugsweise aktualisieren die Knoten diese Knotendaten oder Knoteneigenschaften automatisiert beim Bestimmungsmodul. Der Bereitstellungsanfragedatensatz kann beispielsweise die Knotenanforderungen und/oder eine Mindestanzahl der vorgegebenen Anzahl der Anfrageverarbeitungsknoten vorgeben. Alternativ oder zusätzlich kann das Bestimmungsmodul die Knotenanforderungen und/oder die vorgegebenen Anzahl der Anfrageverarbeitungsknoten anhand des Senderprüfergebnis und/oder der Senderinformationen und/oder des objektspezifischen Objektdatensatzes und/oder des Bereitstellungsanfragedatensatzes ermittelt. Hierzu berücksichtigt das Bestimmungsmodul beispielsweise die Datenschutzrichtlinien, die für einen entsprechenden Sender gelten. Dazu werden beispielsweise die Senderinformationen ausgewertet, die beispielsweise eine Standortinformation über den Sender umfassen. Anhand des Standortes werden beispielsweise die entsprechenden Datenschutzrichtlinien ermittelt und beispielsweise Knoten als Anfrageverarbeitungsknoten ausgewählt, die diese Datenschutzrichtlinien erfüllen.

Die vorgegebene Anzahl von Anfrageverarbeitungsknoten entspricht somit in einem einfachen Fall der vorgegebenen Anzahl von Empfängern.

Die jeweiligen Anfrageverarbeitungsknoten sind dazu eingerichtet, eine objektspezifische Berechtigungsfreigabe anhand der Bereitstellungsanforderung (z. B. mittels des Bereitstellungsanfragedatensatzes), des objektspezifischen Objektdatensatzes und der Senderinformation zu ermitteln, wobei die jeweiligen objektspezifischen Berechtigungsfreigaben in Transaktionen des verteilten Datenbanksystems gespeichert werden und mittels des verteilten Datenbanksystems an das Berechtigungssteuerungsmodul übermittelt werden bzw. diesem bereitgestellt werden.

Um die entsprechenden objektspezifischen Berechtigungsfreigaben zu berechnen und die Anfrageverarbeitungsknoten zu bestimmen, können beispielsweise folgende Werte ermittelt und/oder gespeichert werden (z. B. im Bestimmungsmodul und/oder in Transaktionen des verteilten Datenbanksystems).

E_total = Gesamtanzahl aller am System erfolgreicher Anfrageverarbeitungsknoten, wobei ein Anfrageverarbeitungsknoten beispielsweise auch ein Sender sein kann. Ein Sender, der ein Anfrageverarbeitungsknoten ist, kann beispielsweise kein Anfrageverarbeitungsknoten für eine Bereitstellungsanforderung sein, die er selbst gesendet hat. Dies wird vorzugsweise vom Überprüfungsmodul und/oder Bestimmungsmodul überprüft und ggf. bei der Wahl der Anfrageverarbeitungsknoten berücksichtigt.

E_active = Summe der aktiven Sessions (z. B. der Anfrageverarbeitungsknoten hat sich mit dem Steuersystem zumindest einmal verbunden und hat beispielsweise eine Statusmeldung ausgetauscht) eines Anfrageverarbeitungsknoten innerhalb eines vorgegebenen Zeitraumes (z. B. der letzten 4 Quartale) am Steuersystem nach erfolgreicher Anmeldung oder Registrierung oder Installation der Anfrageverarbeitungsknoten.

E_vote = Anzahl der ermittelten objektspezifischen Berechtigungsfreigaben pro Anfrageverarbeitungsknoten innerhalb eines vorgegebenen Zeitraumes (z. B. der letzten 4 Quartale).

NVmin = Minimale notwendige Anzahl von Anfrageverarbeitungsknoten, die eine objektspezifische Berechtigungsfreigabe ermitteln sollen.

NVmax = Maximale notwendige Anzahl von Anfrageverarbeitungsknoten, die eine objektspezifische Berechtigungsfreigabe ermitteln sollen.

E_Voter = Ausgewählte Anfrageverarbeitungsknoten und deren Anzahl

E_similar _device _cl = Anzahl der Sender mit einem Objekt, wobei deren Objekt die gleiche Geräteklasse (z. B. Smart-Phones, TFT-Display, Tablets) zugeordnet ist.

E_similar_device_Manufac = Anzahl der Sender mit Objekten des gleichen Herstellers.

Die ausgewählten Anfrageverarbeitungsknoten und deren Anzahl kann beispielsweise wie in der nachfolgenden Variante dargestellt ermittelt werden.

```
If ((E_similar_device_cl) > NVmin &&
    (E_similar_device_cl) < NVmax)) then
 {
   E_Voter = E_similar_device_cl x 0.8 + random
   (E_active) *0.2 = NVmax
 }
If (E_similar_device_cl) > NVmax
 {
    E_Voter = random (E_similar_device_cl) = NVmax
 }
If (E_similar_device_cl) < NVmin then
 {
    E_Voter = E_similar_device_cl x + random (E_active)
        = NVmax
 }
```

Das Steuersystem bzw. das verteilte Datenbanksystem übernimmt die Übermittlung der Anfragetransaktion an die Anfrageverarbeitungsknoten. Internen Knoten wird beispielsweise die Anfragetransaktion direkt mittels der Replikation der Daten(Blöcke) der Blockkette übermittelt. Bei externen Knoten können diese Knoten entweder selbständig innerhalb eines vorgegebenen Zeitintervalls prüfen, ob eine Anfragetransaktion für sie vorliegt. Dies kann beispielsweise dadurch erfolgen, dass die externen Knoten über eine Datenbankschnittstelle einen Zugriff auf das verteilte Datenbanksystems erhalten und die darin gespeicherten Transaktionen lesen können. Alternativ liest das Steuersystem oder das Bestimmungsmodul die Anfragetransaktion für entsprechende Anfrageverarbeitungsknoten und übermittelt bzw. sendet diese Anfragetransaktion an die entsprechenden Anfrageverarbeitungsknoten.

Die Anfrageverarbeitungsknoten (interne und/oder externe Knoten) berechnen dann - wie oben dargestellt - jeweils eine objektspezifische Berechtigungsfreigabe anhand der Bereitstellungsanforderung, des objektspezifischen Objektdatensatzes und der Senderinformation. Beispielsweise kann bei dieser Berechnung auch der Bereitstellungsanfragedatensatz berücksichtigt werden.

Die jeweiligen objektspezifischen Berechtigungsfreigaben werden in Transaktionen des verteilten Datenbanksystems gespeichert. Bei internen Knoten speichert der Knoten diese Transaktion selbst in der Blockkette (und es erfolgt beispielsweise eine Validierung der Transaktion). Bei externen Knoten wird dieses Speichern mittels eines Blockketten- Orakels oder einer Datenbankschnittstelle realisiert. Hierzu wird die entsprechende Transaktion mittels des Blockketten- Orakels oder der Datenbankschnittstelle an das verteilte Datenbanksystem übermittelt und das Speichern und Validieren übernimmt dann das Datenbanksystem bzw. dessen Infrastruktur.

Das Berechtigungssteuerungsmodul 130 ist zum Ermitteln einer Gesamtberechtigungsfreigabe der dem Objekt zugeordneten Ressource eingerichtet, wobei zum Ermitteln der Gesamtberechtigungsfreigabe die jeweiligen objektspezifischen Berechtigungsfreigaben der jeweiligen Anfrageverarbeitungsknoten berücksichtigt werden und die Gesamtberechtigungsfreigabe in Transaktionen des verteilten Datenbanksystems gespeichert werden. Insbesondere ist das Berechtigungssteuerungsmodul 130 zum Ermitteln einer Gesamtberechtigungsfreigabe für die dem Objekt zugeordneten Ressource(n) eingerichtet.

Mit anderen Worten werden die vorgegebene Anzahl der Anfrageverarbeitungsknoten bzw. die ausgewählten Anfrageverarbeitungsknoten mittels der Anfragetransaktion darüber informiert, dass diese eine objektspezifische Berechtigungsfreigabe für das Objekt bzw. den Bereitstellungsanfragedatensatz ermitteln sollen. Hierzu kann die Anfragetransaktion beispielsweise eindeutige Identifizierer (oder UIDs) der Anfrageverarbeitungsknoten umfassen und/oder die entsprechenden Anfrageverarbeitungsknoten werden über eine separate Steuernachricht darüber informiert, dass eine entsprechende Anfragetransaktion bereitgestellt ist und die entsprechenden Anfrageverarbeitungsknoten diese abrufen können bzw. sollen. Das Abrufen durch die Anfrageverarbeitungsknoten wird beispielsweise durch die Steuernachricht gesteuert, indem diese beispielsweise einen eindeutigen Identifizierer für die Anfragetransaktion umfasst.

Insbesondere treffen die entsprechenden Anfrageverarbeitungsknoten vorzugsweise eine voneinander unabhängige Individualentscheidung, die angibt ob die Ressourcen bereitgestellt werden oder nicht.

Insbesondere werden die dafür notwendigen Prozessschritte und die Individualentscheidungen als Transaktion und/oder mittels eines entsprechenden Smart Contract abgewickelt.

Für die Ermittlung (vorzugsweise ist diese rechnergestützt und automatisiert) der Gesamtberechtigungsfreigabe hält werden folgende Werte berechnet:

$$\texttt{Entities\_Voters\_akt\_min = Faktor * E\_Voters 0,51 < Faktor < 0,9}$$

Das Berechtigungssteuerungsmodul 130 liefert beispielsweise den optimalen Wert für <Faktor> unter Berücksichtigung der vorgegebenen Anzahl von Anfrageverarbeitungsknoten, der Historie des Prozesses für Gesamtberechtigungsfreigaben, wie aktiv die ausgewählten Anfrageverarbeitungsknoten waren (z. B. wie oft und wie lange die entsprechenden Anfrageverarbeitungsknoten am Steuersystem angemeldet waren bzw. mit diesem verbunden waren) und der Wahrscheinlichkeit, dass mindestens 51 % der objektspezifischen Berechtigungsfreigaben die Bereitstellung der Ressource für das Objekt bestätigen. Alternativ oder zusätzlich kann beispielsweise gefordert sein, dass mindestens 51 % der Anfrageverarbeitungsknoten eine entsprechende objektspezifische Berechtigungsfreigabe ermittelt haben, die das Berechtigungssteuerungsmodul berücksichtigen kann. Beispielsweise sind hier E_Voters die für den aktuellen Fall ausgewählten Anfrageverarbeitungsknoten bzw. geben auch deren Anzahl an. In anderen Szenarien muss nicht zwangsläufig ein Wert von 51 % gewählt werden. Hier können beispielsweise in anderen Fällen auch andere Werte gewählt werden.

Die Gesamtberechtigungsfreigabe kann beispielsweise wie folgt ermittelt werden:

T_Vote_max1 = maximal erlaubte Zeit(dauer), in der eine erste Berechnung der Gesamtberechtigungsfreigaben durchgeführt werden kann bzw. soll

$$\texttt{T\_Vote\_max2 = T\_Vot\_max1 / 10}$$

T_Vote_min1 =     maximale erlaubte Zeit(dauer), in der eine erste Berechnung der Gesamtberechtigungsfreigaben durchgeführt werden kann bzw. soll.

$$T\_Vote\_neg = T\_Vote\_max\ 1/\ 10$$

T_Vote_Phase2_max =     maximal erlaubte Zeit(dauer), in der eine zweite Berechnung der Gesamtberechtigungsfreigaben durchgeführt werden kann bzw. soll

Für die Berechnung der Gesamtberechtigungsfreigabe berücksichtigt beispielsweise das Berechtigungssteuerungsmodul 130 folgende Parameter und setzt diese zueinander in Beziehung:

1) Die objektspezifischen Berechtigungsfreigaben bestätigen (z. B. alle objektspezifischen Berechtigungsfreigaben bestätigen dies) die Freigabe der Ressource (Positiv-Entscheidung) und die vorgegebene Anzahl von Anfrageverarbeitungsknoten haben ihre jeweilige objektspezifische Berechtigungsfreigabe in der Zeitspanne <= T_Vote_min1 abgegeben. Das Ergebnis der Gesamtberechtigungsfreigabe, das anhand dieser Daten berechnet wurde gibt an, dass die Ressource freigegeben bzw. bereitgestellt wird. Dies wird dann beispielsweise vom Steuersystem bzw. vom Ressourcenfreigabemodul 140 umgesetzt.

2) Die objektspezifischen Berechtigungsfreigaben bestätigen (z. B. alle objektspezifischen Berechtigungsfreigaben bestätigen dies) die Freigabe der Ressource (Positiv-Entscheidung) und eine Teilmenge der vorgegebenen Anzahl der Anfrageverarbeitungsknoten haben ihre jeweilige objektspezifische Berechtigungsfreigabe in der Zeitspanne <= T_Vote_max1 berechnet und bereitgestellt. Ist die Teilmenge > 50% von der vorgegebenen Anzahl der Anfrageverarbeitungsknoten, wird wie unter 1 weiter verfahren. Ist die Teilmenge <=50 % der vorgegebenen Anzahl der Anfrageverarbeitungsknoten, wird die Berechnung der objektspezifischen Berechtigungsfreigaben durch die vorgegebene Anzahl von Anfrageverarbeitungsknoten wiederholt. Hierzu kann eine entsprechende Steuerungsnachricht an die vorgegebene Anzahl von Anfrageverarbeitungsknoten gesendet werden oder es werden Ersatzknoten für die Anfrageverarbeitungsknoten ausgewählt (z. B. durch das Bestimmungsmodul), die nicht rechtzeitig geantwortet haben. Die maximale Zeit(dauer) für diese zweite Berechnung der Gesamtberechtigungsfreigabe entspricht T_Vote_max2. Bestätigen beispielsweise eine Mehrheit der objektspezifischen Berechtigungsfreigaben die Freigabe bzw. das Bereitstellen der Ressource, ergibt die Berechnung der Gesamtberechtigungsfreigabe ebenfalls eine Bestätigung des Bereitstellens der Ressource. Eine Mehrheit der objektspezifischen Berechtigungsfreigaben bedeutet dabei insbesondere, dass von allen erwarteten objektspezifischen Berechtigungsfreigaben mehr als 50 % das Bereitstellen der Ressource bestätigen.

3) Mindestens eine der objektspezifischen Berechtigungsfreigaben untersagt das Bereitstellen der Ressource für das Objekt (Negativ-Entscheidung). Das Steuersystem stoppt unabhängig von dem Ergebnis und der Anzahl der anderen objektspezifischen Berechtigungsfreigaben hinsichtlich T_Vote_max1 die Berechnung der objektspezifischen Berechtigungsfreigaben und/oder der Gesamtberechtigungsfreigabe. Die Anfrageverarbeitungsknoten, die Negativ-Entscheidung ermitteln bzw. berechnet haben werden dazu aufgefordert oder angesteuert, die Grundlage/Daten für die Negativ-Entscheidung zu übermitteln. Diese Daten können Dokumente, Bescheinigungen, Zeugenaussagen, schriftliche Hinweise, durch neuronale Netze ermittelte Plausibilitätswerte, Abgleiche mit anderen Datenbanken (z. B. wurde das Smart-Phone bereits über einen Geoortungsdienst an einem anderen Ort lokalisiert) sein. Diese Daten werden dann durch das Steuersystem an E_Voters übermittelt. E_Voters können z. B. die konkreten Anfrageverarbeitungsknoten die vorher bereits bestimmt wurden sein. Alternativ kann eine neu vorgegebene Zahl von Anfrageverarbeitungsknoten ermittelt werden und dann entsprechend neue Anfrageverarbeitungsknoten ausgewählt werden, die z. B. auch einen Teil der schon vorher ausgewählten Anfrageverarbeitungsknoten umfassen können. Alternativ wird die vorgegebene Anzahl an Anfrageverarbeitungsknoten, die bereits ermittelt wurde, beibehalten, wobei für diese Anzahl neue Anfrageverarbeitungsknoten ausgewählt werden, die z. B. auch einen Teil der schon vorher ausgewählten Anfrageverarbeitungsknoten umfassen können. Nun wird die Berechnung der objektspezifischen Berechtigungsfreigaben innerhalb der Zeitspanne T_Vote_Phase2_max erneut durchgeführt. Dabei Berechnen beispielsweise die neuronalen Netze der Anfrageverarbeitungsknoten anhand der Daten ihre jeweiligen objektspezifischen Berechtigungsfreigaben. Wenn alle neu berechneten objektspezifischen Berechtigungsfreigaben positiv (eine Positiv-Entscheidung berechnet haben) sind, wird wie unter 1 weiterverfahren und die Gesamtberechtigungsfreigabe bestätigt die Freigabe der Ressource. Umfassen die neu berechneten objektspezifischen Berechtigungsfreigaben mindestens eine Negativ-Entscheidung, wird die Berechnung der objektspezifischen Berechtigungsfreigaben und/oder der Gesamtberechtigungsfreigabe abgebrochen und ein Bereitstellen der Ressource unterbunden.

Das Ressourcenfreigabemodul 140 ist dabei derart konfiguriert, dass mittels der Gesamtberechtigungsfreigabe ein Bereitstellen der dem Objekt zugeordneten Ressource gesteuert wird. Bestätigt beispielsweise die Gesamtberechtigungsfreigabe die Freigabe der Ressource, werden die Ressourcen freigegeben. Erlaubt beispielsweise die Gesamtberechtigungsfreigabe nicht die Freigabe der Ressource, wird die Freigabe der Ressourcen unterbunden.

In einer weiteren Variante sind das erste Überprüfungsmodul 110 und/oder das erste Speichermodul 120 und/oder das Berechtigungssteuerungsmodul 130 und/oder das Ressourcenfreigabemodul 140 und/oder Anfrageverarbeitungsknoten und/oder ein Teil der Anfrageverarbeitungsknoten und/oder das optionale Registrierungsmodul 170 und/oder das zweite Kommunikationsmodul 150 als Elemente/Komponenten des verteilten Datenbanksystems ausgebildet. Beispielsweise sind die Elemente/Komponenten integrale Elemente/Komponenten des verteilten Datenbanksystems.

In einer weiteren Variante sind das erste Überprüfungsmodul 110 und/oder das erste Speichermodul 120 und/oder das Berechtigungssteuerungsmodul 130 und/oder das Ressourcenfreigabemodul 140 und/oder das optionale Registrierungsmodul 170 und/oder Anfrageverarbeitungsknoten und/oder ein Teil der Anfrageverarbeitungsknoten und/oder das zweite Kommunikationsmodul 150 als Elemente/Komponenten separat von dem verteilten Datenbanksystem ausgebildet.

In einer Implementierungsvariante kann ein Modul, können mehrere Module oder können alle Module als Softwarekomponente (z. B. als Smart-Contract) oder als Hardwarekomponente oder als eine Kombination aus Hardware- und Softwarekomponenten realisiert werden.

Als Softwarekomponente kann ein entsprechendes Modul beispielsweise als Smart-Contract realisiert sein, der durch die Blockkette bzw. deren Infrastruktur ausgeführt wird. Hierzu ist der Smart-Contract beispielsweise in Transaktionen gespeichert, die wiederum in Datenblöcken oder Blöcken der Blockkette BC gespeichert werden.

Als Hardwarekomponente kann ein entsprechendes Modul beispielsweise durch ein Blockketten-Orakel und/oder einen Knoten/Gerät der Blockkette realisiert werden, die insbesondere vertrauenswürdig sind und mittels eines digitalen Zertifikats oder digitaler Signaturen die entsprechenden Daten/Transaktionen signieren.

Das Steuersystem und/oder die Module und/oder die Anfrageverarbeitungsknoten und/oder der Sender und/oder das Objekt und/oder das verteilte Datenbanksystem und/oder die Knoten des verteilten Datenbanksystems(z. B. Blockketten-Knoten, Gerate (Geräteknoten und blockkettenexterne Geräte)) können beispielsweise jeweils zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können. Die weitere/n Komponente/n können beispielsweise ebenfalls über die Blockkette bzw. deren Infrastruktur miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

In einer weiteren Implementierungsvariante umfasst das Steuersystem folgendes:

- einen Sender zum Senden eines Bereitstellungsanfragedatensatzes mittels eines ersten Kommunikationsmoduls, wobei

  - der Bereitstellungsanfragedatensatz eine Bereitstellungsanforderung für eine einem Objekt zugeordneten Ressource umfasst,
  - der Bereitstellungsanfragedatensatz Senderinformationen des Senders des Bereitstellanfragedatensatzes umfasst,
  - der Bereitstellungsanfragedatensatz einen objektspezifischen Objektdatensatz für das Objekt umfasst;

- ein verteiltes Datenbanksystem aufweisend

  - eine Vielzahl von Knoten, wobei die Knoten über ein erstes Kommunikationsnetzwerk miteinander verbunden sind;
  - zweites Kommunikationsmodul zum Empfangen des Bereitstellungsanfragedatensatzes;
  - ein erstes Speichermodul zum Speichern des Bereitstellungsanfragedatensatzes in einer Anfragetransaktion, wobei

- die Anfragetransaktion mittels des verteilten Datenbanksystems gespeichert wird,
- die Anfragetransaktion mittels des verteilten Datenbanksystems an eine vorgegebene Anzahl von Empfängern übermittelt,
- die vorgegebene Anzahl von Empfängern anhand des der Senderinformationen und/oder des objektspezifischen Objektdatensatzes und/oder des Bereitstellungsanfragedatensatzes ermittelt wird;

- eine vorgegebene Anzahl von Anfrageverarbeitungsknoten, wobei

  - die vorgegebene Anzahl von Anfrageverarbeitungsknoten die vorgegebene Anzahl von Empfängern ist,
  - jeweils die Anfrageverarbeitungsknoten eine objektspezifische Berechtigungsfreigabe anhand der Bereitstellungsanforderung ermitteln (z. B. unter Berücksichtigung des objektspezifischen Objektdatensatzes und der Senderinformation),
  - die jeweiligen objektspezifische Berechtigungsfreigabe beispielsweise in Transaktionen des verteilten Datenbanksystems gespeichert werden;

- ein Berechtigungssteuerungsmodul zum Ermitteln einer Gesamtberechtigungsfreigabe der dem Objekt zugeordneten Ressource, wobei

  - zum Ermitteln der Gesamtberechtigungsfreigabe die jeweiligen objektspezifischen Berechtigungsfreigaben der jeweiligen Anfrageverarbeitungsknoten berücksichtigt werden;
  - die Gesamtberechtigungsfreigabe beispielsweise in Transaktionen des verteilten Datenbanksystems gespeichert wird.

In einer weiteren Implementierungsvariante umfasst das Steuersystem folgendes:

- einen Sender zum Senden eines Bereitstellungsanfragedatensatzes mittels eines ersten Kommunikationsmoduls, wobei

  - der Bereitstellungsanfragedatensatz eine Bereitstellungsanforderung für eine einem Objekt zugeordneten Ressource umfasst,
  - der Bereitstellungsanfragedatensatz Senderinformationen des Senders des Bereitstellanfragedatensatzes umfasst,
  - der Bereitstellungsanfragedatensatz einen objektspezifischen Objektdatensatz für das Objekt umfasst;

- ein verteiltes Datenbanksystem aufweisend

  - eine Vielzahl von Knoten, wobei die Knoten über ein erstes Kommunikationsnetzwerk miteinander verbunden sind;

- zweites Kommunikationsmodul zum Empfangen des Bereitstellungsanfragedatensatzes;
- ein erstes Speichermodul zum Speichern des Bereitstellungsanfragedatensatzes in einer Anfragetransaktion, wobei

  - die Anfragetransaktion mittels des verteilten Datenbanksystems gespeichert wird,
  - die Anfragetransaktion mittels des verteilten Datenbanksystems an eine vorgegebene Anzahl von Empfängern übermittelt,
  - die vorgegebene Anzahl von Empfängern anhand der Senderinformationen und/oder des objektspezifischen Objektdatensatzes und/oder des Bereitstellungsanfragedatensatzes ermittelt wird;

- eine vorgegebene Anzahl von Anfrageverarbeitungsknoten, wobei

  - die vorgegebene Anzahl von Anfrageverarbeitungsknoten die vorgegebene Anzahl von Empfängern ist,
  - jeweils die Anfrageverarbeitungsknoten eine objektspezifische Berechtigungsfreigabe anhand der Bereitstellungsanforderung ermittelt (z. B. unter Berücksichtigung des objektspezifischen Objektdatensatzes und der Senderinformation),
  - die jeweiligen objektspezifischen Berechtigungsfreigaben beispielsweise in Transaktionen des verteilten Datenbanksystems gespeichert werden;

- ein Berechtigungssteuerungsmodul zum Ermitteln einer Gesamtberechtigungsfreigabe der dem Objekt zugeordneten Ressource, wobei

  - zum Ermitteln der Gesamtberechtigungsfreigabe die jeweiligen objektspezifischen Berechtigungsfreigaben der jeweiligen Anfrageverarbeitungsknoten berücksichtigt werden;
  - die Gesamtberechtigungsfreigabe beispielsweise in Transaktionen des verteilten Datenbanksystems gespeichert wird.

In einer weiteren Implementierungsvariante umfasst das Steuersystem folgendes:

- einen Sender zum Senden eines Bereitstellungsanfragedatensatzes mittels eines ersten Kommunikationsmoduls, wobei

  - der Bereitstellungsanfragedatensatz eine Bereitstellungsanforderung für eine einem Objekt zugeordneten Ressource umfasst,
  - der Bereitstellungsanfragedatensatz Senderinformationen des Senders des Bereitstellanfragedatensatzes umfasst,
  - der Bereitstellungsanfragedatensatz einen objektspezifischen Objektdatensatz für das Objekt umfasst;

- ein verteiltes Datenbanksystem aufweisend

  - eine Vielzahl von Knoten, wobei die Knoten über ein erstes Kommunikationsnetzwerk miteinander verbunden sind;

- ein zweites Kommunikationsmodul zum Empfangen des Bereitstellungsanfragedatensatzes;
- ein erstes Überprüfungsmodul zum Überprüfen des Senders anhand der Senderinformationen, wobei das erste Überprüfungsmodul ein entsprechendes Senderprüfergebnis bereitstellt;
- ein erstes Speichermodul zum Speichern des Bereitstellungsanfragedatensatzes mit dem entsprechenden Senderprüfergebnis in einer Anfragetransaktion, wobei

  - die Anfragetransaktion mittels des verteilten Datenbanksystems gespeichert wird,
  - die Anfragetransaktion mittels des verteilten Datenbanksystems an eine vorgegebene Anzahl von Empfängern übermittelt,
  - die vorgegebene Anzahl von Empfängern anhand des Senderprüfergebnis und/oder der Senderinformationen und/oder des objektspezifischen Objektdatensatzes und/oder des Bereitstellungsanfragedatensatzes ermittelt wird;

- eine vorgegebene Anzahl von Anfrageverarbeitungsknoten, wobei

  - die vorgegebene Anzahl von Anfrageverarbeitungsknoten die vorgegebene Anzahl von Empfängern ist,
  - jeweils die Anfrageverarbeitungsknoten eine objektspezifische Berechtigungsfreigabe anhand der Bereitstellungsanforderung, des objektspezifischen Objektdatensatzes und der Senderinformation ermittelt,
  - die jeweiligen objektspezifischen Berechtigungsfreigaben insbesondere in Transaktionen des verteilten Datenbanksystems gespeichert werden;

- ein Berechtigungssteuerungsmodul zum Ermitteln einer Gesamtberechtigungsfreigabe der dem Objekt zugeordneten Ressource, wobei

  - zum Ermitteln der Gesamtberechtigungsfreigabe die jeweiligen objektspezifischen Berechtigungsfreigaben der jeweiligen Anfrageverarbeitungsknoten berücksichtigt werden;
  - die Gesamtberechtigungsfreigabe insbesondere in Transaktionen des verteilten Datenbanksystems gespeichert werden;

- ein Ressourcenfreigabemodul, wobei

  - mittels der Gesamtberechtigungsfreigabe ein Bereitstellen der dem Objekt zugeordneten Ressource gesteuert wird.

In einer weiteren Implementierungsvariante umfasst das Steuersystem folgendes:

- einen Sender zum Senden eines Bereitstellungsanfragedatensatzes mittels eines ersten Kommunikationsmoduls, wobei

  - der Bereitstellungsanfragedatensatz eine Bereitstellungsanforderung für eine einem Objekt zugeordneten Ressource umfasst,
  - der Bereitstellungsanfragedatensatz Senderinformationen des Senders des Bereitstellanfragedatensatzes umfasst,
  - der Bereitstellungsanfragedatensatz einen objektspezifischen Objektdatensatz für das Objekt umfasst;

- ein verteiltes Datenbanksystem aufweisend

  - eine Vielzahl von Knoten, wobei die Knoten über ein erstes Kommunikationsnetzwerk miteinander verbunden sind;
  - ein zweites Kommunikationsmodul zum Empfangen des Bereitstellungsanfragedatensatzes;

- ein erstes Speichermodul zum Speichern des Bereitstellungsanfragedatensatzes in einer Anfragetransaktion, wobei

  - die Anfragetransaktion mittels des verteilten Datenbanksystems gespeichert wird,
  - die Anfragetransaktion mittels des verteilten Datenbanksystems an eine vorgegebene Anzahl von Empfängern übermittelt,
  - die vorgegebene Anzahl von Empfängern anhand der Senderinformationen und/oder des objektspezifischen Objektdatensatzes und/oder des Bereitstellungsanfragedatensatzes ermittelt wird;

- eine vorgegebene Anzahl von Anfrageverarbeitungsknoten, wobei

  - die vorgegebene Anzahl von Anfrageverarbeitungsknoten die vorgegebene Anzahl von Empfängern ist,
  - jeweils die Anfrageverarbeitungsknoten eine objektspezifische Berechtigungsfreigabe anhand der Bereitstellungsanforderung ermittelt (z. B. unter Berücksichtigung des objektspezifischen Objektdatensatzes und der Senderinformation),
  - die jeweiligen objektspezifischen Berechtigungsfreigaben beispielsweise in Transaktionen des verteilten Datenbanksystems gespeichert werden;

- ein Berechtigungssteuerungsmodul zum Ermitteln einer Gesamtberechtigungsfreigabe für die dem Objekt zugeordneten Ressource, wobei

  - zum Ermitteln der Gesamtberechtigungsfreigabe die jeweiligen objektspezifischen Berechtigungsfreigaben der jeweiligen Anfrageverarbeitungsknoten berücksichtigt werden;
  - die Gesamtberechtigungsfreigabe beispielsweise in Transaktionen des verteilten Datenbanksystems gespeichert wird.

In einer weiteren Implementierungsvariante ist das erste Speichermodul als separates Modul ausgebildet und umfasst:

- ein Kommunikationsmodul zum Empfangen eines Bereitstellungsanfragedatensatzes;
- ein Bestimmungsmodul zum Ermitteln einer vorgegebene Anzahl von Empfängern anhand der Senderinformationen und/oder des objektspezifischen Objektdatensatzes und/oder des Bereitstellungsanfragedatensatzes;
- ein (integrales) Speichermodul zum Speichern des Bereitstellungsanfragedatensatzes in einer Anfragetransaktion, wobei

  - die Anfragetransaktion mittels eines/des verteilten Datenbanksystems gespeichert wird,
  - die Anfragetransaktion mittels des verteilten Datenbanksystems an die vorgegebene Anzahl von Empfängern übermittelt;

In einer weiteren Implementierungsvariante ist das Berechtigungssteuerungsmodul als separates Modul ausgebildet und umfasst:

- ein Kommunikationsmodul zum Empfangen von jeweiligen objektspezifischen Berechtigungsfreigaben für eine einem Objekt zugeordneten Ressource;
- ein (internes) Berechtigungssteuerungsmodul zum Ermitteln einer Gesamtberechtigungsfreigabe für die dem Objekt zugeordneten Ressource, wobei

    - zum Ermitteln der Gesamtberechtigungsfreigabe die jeweiligen objektspezifischen Berechtigungsfreigaben der jeweiligen Anfrageverarbeitungsknoten berücksichtigt werden;
    - die Gesamtberechtigungsfreigabe beispielsweise in Transaktionen des verteilten Datenbanksystems gespeichert werden.

Die Module sind beispielsweise über ihre entsprechenden Kommunikationsmodule mit dem ersten Netzwerk NW1 verbunden, sodass die entsprechenden Daten im Steuerungssystem ausgetauscht werden können.

In einer weiteren Implementierungsvariante umfasst das Steuersystem folgendes:

- einen Sender zum Senden eines Bereitstellungsanfragedatensatzes mittels eines ersten Kommunikationsmoduls, wobei

    - der Bereitstellungsanfragedatensatz eine Bereitstellungsanforderung für eine einem Objekt zugeordneten Ressource umfasst,
    - der Bereitstellungsanfragedatensatz Senderinformationen des Senders des der Bereitstellanfragedatensatzes umfasst,
    - der Bereitstellungsanfragedatensatz einen objektspezifischen Objektdatensatz für das Objekt umfasst;

- ein verteiltes Datenbanksystem aufweisend

    - eine Vielzahl von Knoten, wobei die Knoten über ein erstes Kommunikationsnetzwerk miteinander verbunden sind;
    - zweites Kommunikationsmodul zum Empfangen des Bereitstellungsanfragedatensatzes;
    - ein erstes Speichermodul zum Speichern des Bereitstellungsanfragedatensatzes in einer Anfragetransaktion, wobei

        - die Anfragetransaktion mittels des verteilten Datenbanksystems gespeichert wird,
        - die Anfragetransaktion mittels des verteilten Datenbanksystems an eine vorgegebene Anzahl von Empfängern übermittelt,
        - die vorgegebene Anzahl von Empfängern anhand des der Senderinformationen und/oder des objektspezifischen Objektdatensatzes und/oder des Bereitstellungsanfragedatensatzes ermittelt wird;

    - eine vorgegebene Anzahl von Anfrageverarbeitungsknoten, wobei
    - die vorgegebene Anzahl von Anfrageverarbeitungsknoten die vorgegebene Anzahl von Empfängern ist,
    - jeweils die Anfrageverarbeitungsknoten eine objektspezifische Berechtigungsfreigabe anhand der Bereitstellungsanforderung ermittelt (z. B. unter Berücksichtigung des objektspezifischen Objektdatensatzes und der Senderinformation),
    - die jeweiligen objektspezifische Berechtigungsfreigabe beispielsweise in Transaktionen des verteilten Datenbanksystems gespeichert werden;

- ein Berechtigungssteuerungsmodul zum Ermitteln einer Gesamtberechtigungsfreigabe der dem Objekt zugeordneten Ressource, wobei

    - zum Ermitteln der Gesamtberechtigungsfreigabe die jeweiligen objektspezifischen Berechtigungsfreigaben der jeweiligen Anfrageverarbeitungsknoten berücksichtigt werden;
    - die Gesamtberechtigungsfreigabe beispielsweise in Transaktionen des verteilten Datenbanksystems gespeichert werden.

In einer weiteren Implementierungsvariante umfasst das Steuersystem folgendes:

- einen Sender zum Senden eines Bereitstellungsanfragedatensatzes mittels eines ersten Kommunikationsmoduls, wobei

- der Bereitstellungsanfragedatensatz eine Bereitstellungsanforderung für eine einem Objekt zugeordneten Ressource umfasst,
- der Bereitstellungsanfragedatensatz Senderinformationen des Senders des der Bereitstellanfragedatensatzes umfasst,
- der Bereitstellungsanfragedatensatz einen objektspezifischen Objektdatensatz für das Objekt umfasst;

- ein verteiltes Datenbanksystem aufweisend

    - eine Vielzahl von Knoten, wobei die Knoten über ein erstes Kommunikationsnetzwerk miteinander verbunden sind;

- zweites Kommunikationsmodul zum Empfangen des Bereitstellungsanfragedatensatzes;
- ein erstes Speichermodul zum Speichern des Bereitstellungsanfragedatensatzes in einer Anfragetransaktion, wobei

    - die Anfragetransaktion mittels des verteilten Datenbanksystems gespeichert wird,
    - die Anfragetransaktion mittels des verteilten Datenbanksystems an eine vorgegebene Anzahl von Empfängern übermittelt,
    - die vorgegebene Anzahl von Empfängern anhand des der Senderinformationen und/oder des objektspezifischen Objektdatensatzes und/oder des Bereitstellungsanfragedatensatzes ermittelt wird;

- eine vorgegebene Anzahl von Anfrageverarbeitungsknoten, wobei

    - die vorgegebene Anzahl von Anfrageverarbeitungsknoten die vorgegebene Anzahl von Empfängern ist,
    - jeweils die Anfrageverarbeitungsknoten eine objektspezifische Berechtigungsfreigabe anhand der Bereitstellungsanforderung ermittelt (z. B. unter Berücksichtigung des objektspezifischen Objektdatensatzes und der Senderinformation),
    - die jeweiligen objektspezifische Berechtigungsfreigabe beispielsweise in Transaktionen des verteilten Datenbanksystems gespeichert werden;

- ein Berechtigungssteuerungsmodul zum Ermitteln einer Gesamtberechtigungsfreigabe der dem Objekt zugeordneten Ressource, wobei

    - zum Ermitteln der Gesamtberechtigungsfreigabe die jeweiligen objektspezifischen Berechtigungsfreigaben der jeweiligen Anfrageverarbeitungsknoten berücksichtigt werden;
    - die Gesamtberechtigungsfreigabe beispielsweise in Transaktionen des verteilten Datenbanksystems gespeichert werden.

In einer weiteren Implementierungsvariante umfasst das Steuersystem folgendes:

- einen Sender zum Senden eines Bereitstellungsanfragedatensatzes mittels eines ersten Kommunikationsmoduls, wobei

    - der Bereitstellungsanfragedatensatz eine Bereitstellungsanforderung für eine einem Objekt zugeordneten Ressource umfasst,
    - der Bereitstellungsanfragedatensatz Senderinformationen des Senders des Bereitstellanfragedatensatzes umfasst,
    - der Bereitstellungsanfragedatensatz einen objektspezifischen Objektdatensatz für das Objekt umfasst;

- ein verteiltes Datenbanksystem aufweisend

    - eine Vielzahl von Knoten, wobei die Knoten über ein erstes Kommunikationsnetzwerk miteinander verbunden sind;

- zweites Kommunikationsmodul zum Empfangen des Bereitstellungsanfragedatensatzes;
- ein erstes Überprüfungsmodul zum Überprüfen des Senders anhand der Senderinformationen, wobei das erste Überprüfungsmodul ein entsprechendes Senderprüfergebnis bereitstellt;
- ein erstes Speichermodul zum Speichern des Bereitstellungsanfragedatensatzes mit dem entsprechenden Senderprüfergebnis in einer Anfragetransaktion, wobei

- die Anfragetransaktion mittels des verteilten Datenbanksystems gespeichert wird,
- die Anfragetransaktion mittels des verteilten Datenbanksystems an eine vorgegebene Anzahl von Empfängern übermittelt,
- die vorgegebene Anzahl von Empfängern anhand des Senderprüfergebnis und/oder der Senderinformationen und/oder des objektspezifischen Objektdatensatzes und/oder des Bereitstellungsanfragedatensatzes ermittelt wird;

- eine vorgegebene Anzahl von Anfrageverarbeitungsknoten, wobei

  - die vorgegebene Anzahl von Anfrageverarbeitungsknoten die vorgegebene Anzahl von Empfängern ist,
  - jeweils die Anfrageverarbeitungsknoten eine objektspezifische Berechtigungsfreigabe anhand der Bereitstellungsanforderung, des objektspezifischen Objektdatensatzes und der Senderinformation ermittelt,
  - die jeweiligen objektspezifische Berechtigungsfreigabe insbesondere in Transaktionen des verteilten Datenbanksystems gespeichert werden;

- ein Berechtigungssteuerungsmodul zum Ermitteln einer Gesamtberechtigungsfreigabe der dem Objekt zugeordneten Ressource, wobei

  - zum Ermitteln der Gesamtberechtigungsfreigabe die jeweiligen objektspezifischen Berechtigungsfreigaben der jeweiligen Anfrageverarbeitungsknoten berücksichtigt werden;
  - die Gesamtberechtigungsfreigabe insbesondere in Transaktionen des verteilten Datenbanksystems gespeichert werden;

- ein Ressourcenfreigabemodul, wobei

  - mittels der Gesamtberechtigungsfreigabe ein Bereitstellen der dem Objekt zugeordneten Ressource gesteuert wird.

In einer weiteren Implementierungsvariante umfasst das Steuersystem folgendes:

- einen Sender zum Senden eines Bereitstellungsanfragedatensatzes mittels eines ersten Kommunikationsmoduls, wobei

  - der Bereitstellungsanfragedatensatz eine Bereitstellungsanforderung für eine einem Objekt zugeordneten Ressource umfasst,
  - der Bereitstellungsanfragedatensatz Senderinformationen des Senders des der Bereitstellanfragedatensatzes umfasst,
  - der Bereitstellungsanfragedatensatz einen objektspezifischen Objektdatensatz für das Objekt umfasst;

- ein verteiltes Datenbanksystem aufweisend

  - eine Vielzahl von Knoten, wobei die Knoten über ein erstes Kommunikationsnetzwerk miteinander verbunden sind;
  - zweites Kommunikationsmodul zum Empfangen des Bereitstellungsanfragedatensatzes;
  - ein erstes Speichermodul zum Speichern des Bereitstellungsanfragedatensatzes in einer Anfragetransaktion, wobei

    - die Anfragetransaktion mittels des verteilten Datenbanksystems gespeichert wird,
    - die Anfragetransaktion mittels des verteilten Datenbanksystems an eine vorgegebene Anzahl von Empfängern übermittelt,
    - die vorgegebene Anzahl von Empfängern anhand des der Senderinformationen und/oder des objektspezifischen Objektdatensatzes und/oder des Bereitstellungsanfragedatensatzes ermittelt wird;

  - eine vorgegebene Anzahl von Anfrageverarbeitungsknoten, wobei

    - die vorgegebene Anzahl von Anfrageverarbeitungsknoten die vorgegebene Anzahl von Empfängern ist,
    - jeweils die Anfrageverarbeitungsknoten eine objektspezifische Berechtigungsfreigabe anhand der Bereitstellungsanforderung ermittelt (z. B. unter Berücksichtigung des objektspezifischen Objektdatensatzes und der Senderinformation),

- die jeweiligen objektspezifische Berechtigungsfreigabe beispielsweise in Transaktionen des verteilten Datenbanksystems gespeichert werden;

- ein Berechtigungssteuerungsmodul zum Ermitteln einer Gesamtberechtigungsfreigabe für die dem Objekt zugeordneten Ressource, wobei

  - zum Ermitteln der Gesamtberechtigungsfreigabe die jeweiligen objektspezifischen Berechtigungsfreigaben der jeweiligen Anfrageverarbeitungsknoten berücksichtigt werden;
  - die Gesamtberechtigungsfreigabe beispielsweise in Transaktionen des verteilten Datenbanksystems gespeichert werden.

In einer weiteren Implementierungsvariante ist das erste Speichermodul als separates Modul ausgebildet und umfasst:

- ein Kommunikationsmodul zum Empfangen eines Bereitstellungsanfragedatensatzes;
- ein Bestimmungsmodul zum Ermitteln einer vorgegebene Anzahl von Empfängern anhand der Senderinformationen und/oder des objektspezifischen Objektdatensatzes und/oder des Bereitstellungsanfragedatensatzes;
- ein (integrales) Speichermodul zum Speichern des Bereitstellungsanfragedatensatzes in einer Anfragetransaktion, wobei

  - die Anfragetransaktion mittels eines/des verteilten Datenbanksystems gespeichert wird,
  - die Anfragetransaktion mittels des verteilten Datenbanksystems an die vorgegebene Anzahl von Empfängern übermittelt;

In einer weiteren Implementierungsvariante ist das Berechtigungssteuerungsmodul als separates Modul ausgebildet und umfasst:

- ein Kommunikationsmodul zum Empfangen von jeweiligen objektspezifischen Berechtigungsfreigaben für eine einem Objekt zugeordneten Ressource;
- ein (internes) Berechtigungssteuerungsmodul zum Ermitteln einer Gesamtberechtigungsfreigabe für die dem Objekt zugeordneten Ressource, wobei

  - zum Ermitteln der Gesamtberechtigungsfreigabe die jeweiligen objektspezifischen Berechtigungsfreigaben der jeweiligen Anfrageverarbeitungsknoten berücksichtigt werden;
  - die Gesamtberechtigungsfreigabe beispielsweise in Transaktionen des verteilten Datenbanksystems gespeichert werden.

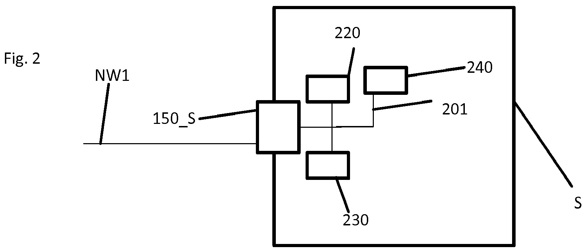

Die Fig. 2 zeigt ein zweites Ausführungsbeispiel der Erfindung. Insbesondere ist in Fig. 2 eine Variante des Senders S aus Fig. 1 gezeigt. Abhängig von der gewählten Implementierungsvariante kann der Sender S auch das Objekt aus Fig. 1 und/oder ein Anfrageverarbeitungsknoten aus Fig. 1 sein.

Im Einzelnen wird in diesem Ausführungsbeispiel zunächst davon ausgegangen, dass der Sender S das Objekt ist. Der Sender S umfasst ein erstes Kommunikationsmodul 150 D (das bereits in Fig. 1 erläutert wurde), einen Sensor 220, ein überwachtes elektronisches Bauteil 230 und ein Steuerungsmodul 240, die über einen Bus 201 kommunikativ miteinander verbunden sind.

Bei dem Sender S bzw. bei dem Objekt kann es sich um ein Mobiltelefon oder ein Smart-Phone handeln. Bei dem Sensor 220 kann es sich um einen Sensor 220 zur Überwachung des elektronischen Bauteils 230 handeln. Bei dem elektronischen Bauteil kann es sich beispielsweise um das Smart-Phone Display/Monitor handeln. Der Sensor 220 kann beispielsweise erfassen, wenn die Hintergrundbeleuchtung ausgefallen ist und/oder der Touch-Screen beschädigt ist (z. B. durch einen Riss im Display werden Fehlersignale der Touch-Oberfläche des Touchscreens erzeugt, die der Sensor 220 auswertet). Insbesondere kann der Sensor 220 einen Zustand des elektronischen Bauteils zu einem vorgegebenen Zeitpunkt erfassen.

Bei der in Fig. 1 erläuterten Registrierung, erfasst das Steuermodul 240 (z. B. das Computerprogramm oder die APP aus Fig. 1) mittels des Sensors 220 einen ersten Zustand des elektronischen Bauteils, der insbesondere einem betriebsbereiten bzw. nicht-defekten Zustand des elektronischen Bauteils entspricht. Dieser Zustand (oder auch Objektzustand) wird beispielsweise im objektspezifischen Objektdatensatz des Registrierungsdatensatzes gespeichert.

Fällt das Smart-Phone herunter und wird das Display bzw. der berührungsempfindliche Monitor(Touch-Display) dabei beschädigt, erfasst der Sensor 220 diese Zustandsänderung des elektronischen Bauteils 230 (also des Displays) und stellt diese Zustandsänderung z. B. mittels eines Steuersignals dem Steuermodul 240 bereit. Das Steuermodul 240 erstellt dann den in den vorhergehenden Ausführungsbeispielen erläuterten Bereitstellungsanfragedatensatz (bzw. eine Variante davon) und übermittelt diese an das Steuersystem bzw. das zweite Kommunikationsmodul aus Fig. 1.

Mit anderen Worten ist das erste Kommunikationsmoduls 150_S zum Senden des Bereitstellungsanfragedatensatzes (z. B. mittels eines verteilten Datenbanksystems) eingerichtet, wobei der Bereitstellungsanfragedatensatz eine Bereitstellungsanforderung für eine dem Sender 150_S zugeordneten Ressource (z. B. ein Ersatzteil für das defekte elektronische Bauteil 230) umfasst. Alternativ oder zusätzlich umfasst der Bereitstellungsanfragedatensatz Senderinformationen des Senders S des Bereitstellanfragedatensatzes. Alternativ oder zusätzlich umfasst der Bereitstellungsanfragedatensatz den objektspezifischen Objektdatensatz für den Sender S bzw. für das überwachte elektronische Bauteil 230. Der objektspezifische Objektdatensatz und/oder die Senderinformationen werden beispielsweise von dem Steuermodul berechnet und im Bereitstellungsanfragedatensatz gespeichert, wenn beispielsweise die Zustandsänderung (Display-Defekt) eingetreten ist. Der objektspezifische Objektdatensatz kann beispielsweise auch noch weitere Sensordaten bzw. von Sensoren erfasste Messwerte umfassen, die mit dem Eintritt der Zustandsänderung des Objektes bzw. des elektronischen Bauteils zusammenhängen. Zusammenhängen bedeutet dabei beispielsweise, dass alle oder ausgewählte Sensordaten innerhalb eines vorgegebenen Zeitraumes (z. B. 5 Minuten) vor und nach dem Eintritt der Zustandsänderung erfasst werden. Diese Sensordaten (ausgewählte/alle) werden dabei ebenfalls in dem objektspezifischen Objektdatensatz gespeichert. Bei den Sensordaten kann es sich, z. B. bei einem Smart-Phone, beispielsweise um Messwerte zur Lage bzw. Lage-Daten des Smart-Phones handeln. Solche Daten werden beispielsweise ohnehin durch das Smart-Phone ermittelt.

Der Sender S kann beispielsweise auch als ein Knoten des verteilten Datenbanksystems ausgebildet sein und beispielsweise den Bereitstellungsanfragedatensatz in einer Transaktion speichern und mittels der Transaktion bzw. des verteilten Datenbanksystems z. B. an das Steuersystem und/oder das erste Überprüfungsmodul und/oder das erste Speichermodul übermitteln bzw. senden. Ist das verteilte Datenbanksystem beispielsweise eine Blockchain, kann der Sender S hierzu vorzugsweise die notwendigen kryptographischen Schlüssel umfassen, um die entsprechenden Transaktionen zu signieren. Hierzu kann beispielsweise eine entsprechende Blockchain-Wallet vom Sender S umfasst sein bzw. auf diesem installiert sein.

Die Anfrageverarbeitungsknoten (nicht in einer Figur dargestellt) können ähnlich oder analog zum Sender S ausgebildet sein.

Ein Anfrageverarbeitungsknoten umfasst ein Kommunikationsmodul (z. B. ein Kommunikationsmodul wie dieses das bereits in Fig. 1 erläutert wurde) und ein Anfrageverarbeitungsmodul, die über einen Bus kommunikativ miteinander verbunden sind. Der Anfrageverarbeitungsknoten empfängt die Anfragetransaktion mittels des Kommunikationsmoduls und übermittelt die Anfragetransaktion an das Anfrageverarbeitungsmodul. Das Anfrageverarbeitungsmodul ist beispielsweise ein (konfiguriertes) neuronales Netzwerk das dazu eingerichtet ist anhand der Bereitstellungsanforderung, des objektspezifischen Objektdatensatzes und der Senderinformation eine objektspezifische Berechtigungsfreigabe zu ermitteln (so wie dies beispielsweise in Fig. 1 bereits erläutert wurde). Die ermittelte Berechtigungsfreigabe wird dann beispielsweise in einem Datensatz und/oder einer entsprechenden Transaktion gespeichert. Ist der Anfrageverarbeitungsknoten beispielsweise ein Knoten des verteilten Datenbanksystems, ist die entsprechende Transaktion eine Transaktion des verteilten Datenbanksystems. Die Transaktion kann dann beispielsweise mittels des verteilten Datenbanksystems an das Berechtigungssteuerungsmodul übermittelt werden. Wie bereits in Fig. 1 erläutert kann der Anfrageverarbeitungsknoten auch ein externer sein.

In einer Variante ist der Anfrageverarbeitungsknoten ein Sender analog zum Sender S, der zusätzlich ein Anfrageverarbeitungsmodul umfasst. Auch der Sender S kann in einer Variante ein Anfrageverarbeitungsmodul umfassen, damit dieser auch als Anfrageverarbeitungsknoten arbeiten kann bzw. realisiert werden kann. Allerdings verarbeitet ein Sender mit der Funktionalität eines Anfrageverarbeitungsknoten vorzugsweise keine Anfragetransaktion/Bereitstellungsanfragedatensatz, der von ihm selbst erzeugt wurde.

Der Sender und/oder die Knoten und/oder das Objekt und/oder die Anfrageverarbeitungsknoten können jeweils beispielsweise zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können. Die weitere/n Komponente/n können beispielsweise ebenfalls über den jeweiligen Bus miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

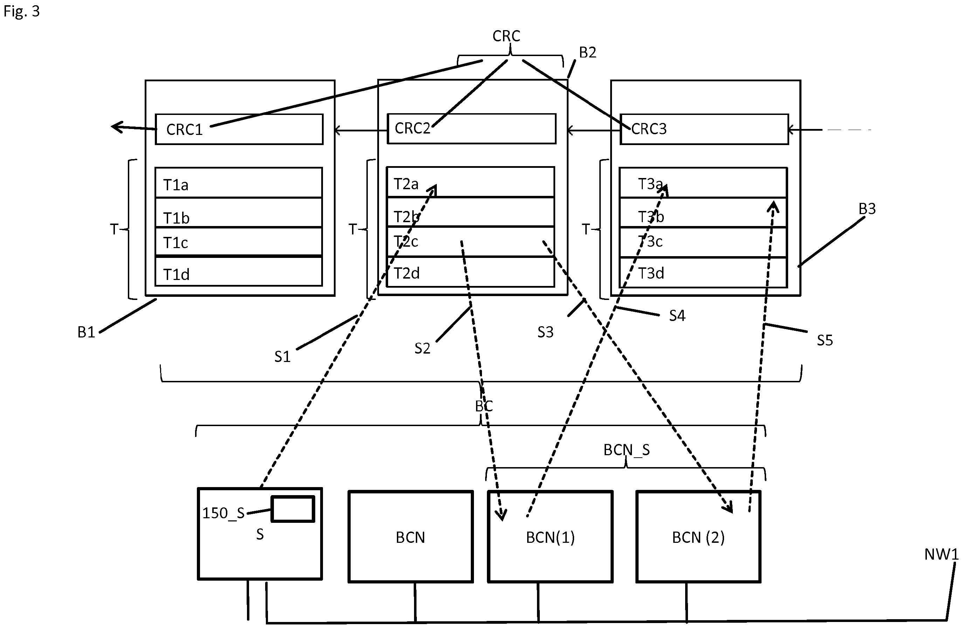

Die Fig. 3 zeigt ein drittes Ausführungsbeispiel der Erfindung, das das verteilte Datenbanksystem aus Fig. 1 darstellt. Im Einzelnen zeigt die Fig. 3 die Kommunikation zwischen dem verteilten Datenbanksystem BC, dem Sender S (der als Knoten des verteilten Datenbanksystems BC ausgebildet ist) und der ausgewählten Anfrageverarbeitungsknoten BCN_S des Steuersystems aus Fig. 1.

Diese Variante kann beispielsweise auch durch das Ausführungsbeispiel von Fig. 1 realisiert werden bzw. ist mit diesem kompatibel. Entsprechend kann das verteilte Datenbanksystem aus Fig. 3 ebenfalls eines oder mehrere Module des Steuersystems aus Fig. 1 aufweisen.

Durch das verteilte Datenbanksystem, das als Blockkette BC realisiert ist, werden mehrere Transaktionen T bereitgestellt bzw. mehrere Transaktionen T gespeichert.

Beispielsweise handelt es sich bei Transaktion T2a um eine Anfragetransaktion aus den vorhergehenden Ausführungsbeispielen. Diese Anfragetransaktion wird in einem ersten Schritt S1 an das verteilte Datenbanksystem gesendet und als Transaktion T2a gespeichert. Das Speichermodul aus Fig. 1 übermittelt dann die Transaktion T2a bzw. die Anfragetransaktion an die vorgegebene Anzahl von Anfrageverarbeitungsknoten BCN S. Die Anzahl beträgt hier der Übersichtlichkeit halber nur 2 Anfrageverarbeitungsknoten. Die Anfrageverarbeitungsknoten und der Sender S sind in diesem Beispiel als Knoten des verteilten Datenbanksystems ausgebildet. Die ausgewählten Anfrageverarbeitungsknoten umfassen einen ersten Anfrageverarbeitungsknoten BCN(1) und einen zweiten Anfrageverarbeitungsknoten BCN(2). Der erste Anfrageverarbeitungsknoten BCN(1) empfängt die Transaktion T2a bzw. die Anfragetransaktion in Schritt S2 und der zweite Anfrageverarbeitungsknoten BCN(2) empfängt die Transaktion T2a bzw. die Anfragetransaktion in Schritt S3.

Der erste Anfrageverarbeitungsknoten BCN(1) ermittelt in einem Schritt S4 eine erste objektspezifische Berechtigungsfreigabe anhand der Anfragetransaktion (genauer anhand der Daten, die die Anfragetransaktion umfasst z. B. die Bereitstellungsanforderung, der objektspezifischen Objektdatensatz und der Senderinformation) und speichert diese in der Transaktion T3a. In einem Schritt S4 ermittelt der zweite Anfrageverarbeitungsknoten BCN(2) auf analoge Weise eine zweite objektspezifische Berechtigungsfreigabe und speichert diese beispielsweise in der Transaktion T3b.

Das Berechtigungssteuerungsmodul ermittelt dann die Gesamtberechtigungsfreigabe der dem Objekt zugeordneten Ressource (z. B. ein Display für ein Smart-Phone, wenn das Objekt ein Smart-Phone ist). Um die Gesamtberechtigungsfreigabe zu ermitteln, werden die entsprechenden Transaktionen mit den objektspezifischen Berechtigungsfreigaben an das Berechtigungssteuerungsmodul übermittelt bzw. von diesem abgerufen. Das Berechtigungssteuerungsmodul ermittelt dann anhand der jeweiligen der objektspezifischen Berechtigungsfreigaben der jeweiligen Anfrageverarbeitungsknoten die Gesamtberechtigungsfreigabe. Mit der Gesamtberechtigungsfreigabe kann dann die Freigabe der Ressource gesteuert werden. Beispielsweise kann hierdurch eine Lieferung eines Ersatzteiles gesteuert bzw. automatisiert werden oder die Bezahlung des Wertes des Displays an den Sender gesteuert werden.

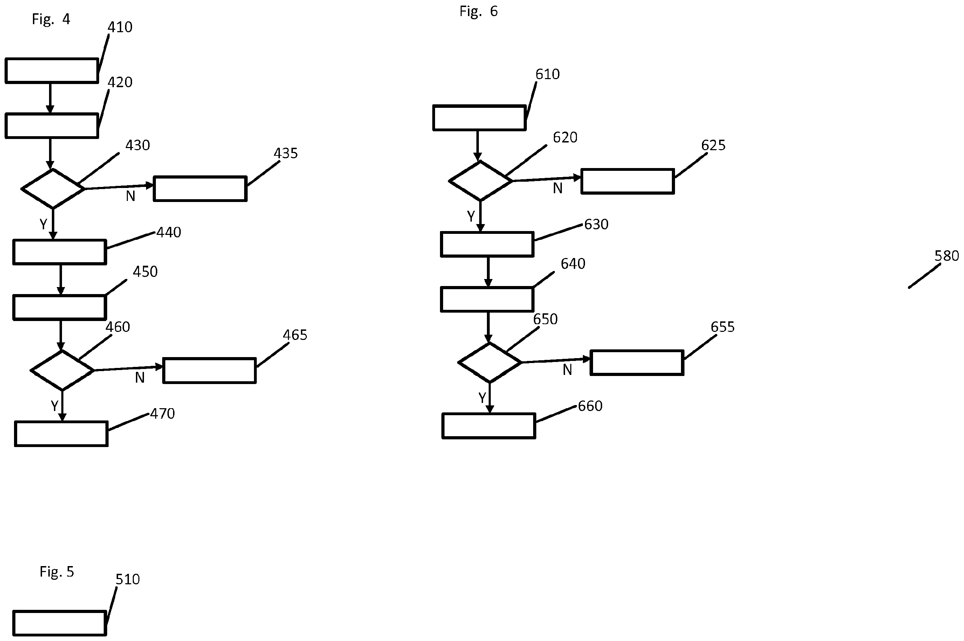

Die Fig. 4 zeigt ein viertes Ausführungsbeispiel der Erfindung als Ablaufdiagramm des erfindungsgemäßen Verfahrens.

Das Verfahren ist vorzugsweise rechnergestützt realisiert.

Im Einzelnen wird in diesem Ausführungsbeispiel ein Verfahren zum rechnergestützten Steuern einer Bereitstellung von Ressourcen realisiert.

Das Verfahren umfasst einen ersten Verfahrensschritt zum Senden 410 eines Bereitstellungsanfragedatensatzes mittels eines ersten Kommunikationsmoduls, wobei

- der Bereitstellungsanfragedatensatz eine Bereitstellungsanforderung für eine einem Objekt zugeordneten Ressource umfasst,
- der Bereitstellungsanfragedatensatz Senderinformationen des Senders des Bereitstellanfragedatensatzes umfasst,
- der Bereitstellungsanfragedatensatz einen objektspezifischen Objektdatensatz für das Objekt umfasst.

Das Verfahren umfasst einen zweiten Verfahrensschritt zum Empfangen 420 des Bereitstellungsanfragedatensatzes.

Das Verfahren umfasst einen dritten Verfahrensschritt zum Überprüfen 430 des Senders anhand der Senderinformationen, wobei das erste Überprüfungsmodul ein entsprechendes Senderprüfergebnis bereitstellt. Ist beispielsweise das Senderprüfergebnis positiv Y (z. B. der Sender ist berechtigt einen entsprechenden Bereitstellungsanfragedatensatz zu senden), wird der Bereitstellungsanfragedatensatz weiterverarbeitet. Ist das Senderprüfergebnis negativ N (z. B. der Sender ist nicht berechtigt einen entsprechenden Bereitstellungsanfragedatensatz zu senden), wird z. B. eine Fehlermeldung oder ein Fehlersignal in einem weiteren Verfahrensschritt 435 ausgegeben bzw. bereitgestellt.

Das Verfahren umfasst einen vierten Verfahrensschritt zum Speichern 440 des Bereitstellungsanfragedatensatzes mit dem entsprechenden Senderprüfergebnis in einer Anfragetransaktion, wobei

- die Anfragetransaktion mittels des verteilten Datenbanksystems gespeichert wird,
- die Anfragetransaktion mittels des verteilten Datenbanksystems an eine vorgegebene Anzahl von Empfängern übermittelt,
- das verteilte Datenbanksystem eine Vielzahl von Knoten aufweist, die über ein erstes Kommunikationsnetzwerk miteinander verbunden sind,
- die vorgegebene Anzahl von Empfängern anhand des Senderprüfergebnis und/oder der Senderinformationen und/oder des objektspezifischen Objektdatensatzes ermittelt wird.

Das Verfahren umfasst einen fünften Verfahrensschritt zum Ermitteln 450 einer objektspezifischen Berechtigungsfreigabe anhand der Bereitstellungsanforderung, des objektspezifischen Objektdatensatzes und der Senderinformation mittels einer vorgegebenen Anzahl von Anfrageverarbeitungsknoten, wobei

- die vorgegebene Anzahl von Anfrageverarbeitungsknoten die vorgegebene Anzahl von Empfängern ist,
- die jeweiligen objektspezifischen Berechtigungsfreigaben in Transaktionen des verteilten Datenbanksystems gespeichert werden.

Das Verfahren umfasst einen sechsten Verfahrensschritt zum Ermitteln 460 einer Gesamtberechtigungsfreigabe der dem Objekt zugeordneten Ressource, wobei

- zum Ermitteln der Gesamtberechtigungsfreigabe die jeweiligen objektspezifischen Berechtigungsfreigaben der jeweiligen Anfrageverarbeitungsknoten berücksichtigt werden;
- die Gesamtberechtigungsfreigabe in Transaktionen des verteilten Datenbanksystems gespeichert wird.

Ist die Gesamtberechtigungsfreigabe beispielsweise positiv Y (z. B. es wird bestätigt, dass die entsprechende Ressource bereitgestellt wird), wird mit Verfahrensschritt sieben weiter gemacht. Ist das Gesamtberechtigungsfreigabe negativ N (z. B. es wird unterbunden, dass die entsprechende Ressource bereitgestellt wird), wird z. B. eine Fehlermeldung oder ein Fehlersignal in einem weiteren Verfahrensschritt 465 ausgegeben bzw. bereitgestellt.

Entsprechend umfasst das Verfahren den siebten Verfahrensschritt zum Steuern 470 eines Bereitstellens der dem Objekt zugeordneten Ressource mittels der Gesamtberechtigungsfreigabe.

Die Fig. 5 zeigt ein viertes Ausführungsbeispiel der Erfindung als Ablaufdiagramm des erfindungsgemäßen Verfahrens.

Das Verfahren ist vorzugsweise rechnergestützt realisiert.

Im Einzelnen wird in diesem Ausführungsbeispiel ein Verfahren zum rechnergestützten Senden eines Bereitstellungsanfragedatensatzes realisiert.

Das Verfahren umfasst einen ersten Verfahrensschritt zum Senden 510 eines Bereitstellungsanfragedatensatzes mittels eines ersten Kommunikationsmoduls, wobei

- der Bereitstellungsanfragedatensatz eine Bereitstellungsanforderung für eine einem Objekt zugeordneten Ressource umfasst,
- der Bereitstellungsanfragedatensatz Senderinformationen des Senders des Bereitstellanfragedatensatzes umfasst,
- der Bereitstellungsanfragedatensatz einen objektspezifischen Objektdatensatz für das Objekt umfasst.

Die Fig. 6 zeigt ein viertes Ausführungsbeispiel der Erfindung als Ablaufdiagramm des erfindungsgemäßen Verfahrens.

Das Verfahren ist vorzugsweise rechnergestützt realisiert.

Im Einzelnen wird in diesem Ausführungsbeispiel ein Verfahren zum rechnergestützten Steuern einer Bereitstellung von Ressourcen realisiert.

Das Verfahren umfasst einen ersten Verfahrensschritt zum Empfangen 610 des Bereitstellungsanfragedatensatzes.

Das Verfahren umfasst einen zweiten Verfahrensschritt zum Überprüfen 620 des Senders anhand der Senderinformationen, wobei das erste Überprüfungsmodul ein entsprechendes Senderprüfergebnis bereitstellt. Ist beispielsweise das Senderprüfergebnis positiv Y (z. B. der Sender ist berechtigt einen entsprechenden Bereitstellungsanfragedatensatz zu senden), wird der Bereitstellungsanfragedatensatz weiterverarbeitet. Ist das Senderprüfergebnis negativ N (z. B. der Sender ist nicht berechtigt einen entsprechenden Bereitstellungsanfragedatensatz zu senden), wird z. B. eine Fehlermeldung oder ein Fehlersignal in einem weiteren Verfahrensschritt 625 ausgegeben bzw. bereitgestellt.

Das Verfahren umfasst einen dritten Verfahrensschritt zum Speichern 630 des Bereitstellungsanfragedatensatzes mit dem entsprechenden Senderprüfergebnis in einer Anfragetransaktion, wobei

- die Anfragetransaktion mittels des verteilten Datenbanksystems gespeichert wird,
- die Anfragetransaktion mittels des verteilten Datenbanksystems an eine vorgegebene Anzahl von Empfängern übermittelt,

- das verteilte Datenbanksystem eine Vielzahl von Knoten aufweist, die über ein erstes Kommunikationsnetzwerk miteinander verbunden sind,
- die vorgegebene Anzahl von Empfängern anhand des Senderprüfergebnis und/oder der Senderinformationen und/oder des objektspezifischen Objektdatensatzes und/oder ermittelt wird.

Das Verfahren umfasst einen vierten Verfahrensschritt zum Ermitteln 640 einer objektspezifischen Berechtigungsfreigabe anhand der Bereitstellungsanforderung, des objektspezifischen Objektdatensatzes und der Senderinformation mittels einer vorgegebenen Anzahl von Anfrageverarbeitungsknoten, wobei

- die vorgegebene Anzahl von Anfrageverarbeitungsknoten die vorgegebene Anzahl von Empfängern ist,
- die jeweiligen objektspezifische Berechtigungsfreigabe in Transaktionen des verteilten Datenbanksystems gespeichert werden.

Das Verfahren umfasst einen fünften Verfahrensschritt zum Ermitteln 650 einer Gesamtberechtigungsfreigabe der dem Objekt zugeordneten Ressource, wobei

- zum Ermitteln der Gesamtberechtigungsfreigabe die jeweiligen objektspezifischen Berechtigungsfreigaben der jeweiligen Anfrageverarbeitungsknoten berücksichtigt werden;
- die Gesamtberechtigungsfreigabe in Transaktionen des verteilten Datenbanksystems gespeichert werden.

Ist die Gesamtberechtigungsfreigabe beispielsweise positiv Y (z. B. es wird bestätigt, dass die entsprechende Ressource bereitgestellt wird), wird mit Verfahrensschritt sieben weiter gemacht. Ist das Gesamtberechtigungsfreigabe negativ N (z. B. es wird unterbunden, dass die entsprechende Ressource bereitgestellt wird), wird z. B. eine Fehlermeldung oder ein Fehlersignal in einem weiteren Verfahrensschritt 655 ausgegeben bzw. bereitgestellt.

Entsprechend umfasst das Verfahren den sechsten Verfahrensschritt zum Steuern 660 eines Bereitstellens der dem Objekt zugeordneten Ressource mittels der Gesamtberechtigungsfreigabe.

Mit der Erfindung kann auf einfache Weise eine Ressourcensteuerung für vernetzte Geräte realisiert werden, bei denen die Teilnehmer (z. B. Teilnehmer, die mittels der vernetzten Geräte miteinander kommunikativ in Verbindung stehen) der vernetzten Geräte sich jeweils nicht vertrauen. Insbesondere wird die Erfindung durch ein verteiltes Datenbanksystem realisiert, das beispielsweise mittels einer Blockkette implementiert ist.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

[1] Andreas M. Antonopoulos "Mastering Bitcoin: Unlocking Digital Cryptocurrencies", O'Reilly Media, December 2014

[2] Roger M. Needham, Michael D. Schroeder "Using encryption for authentication in large networks of computers" ACM: Communications of the ACM. Band 21, Nr. 12 Dezember 1978,

[3] Ross Anderson "Security Engineering. A Guide to Building Dependable Distributed Systems" Wiley, 2001

[4] Henning Diedrich "Ethereum: Blockchains, Digital Assets, Smart Contracts, Decentralized Autonomous Organizations", CreateSpace Independent Publishing Platform, 2016

[5] "The Ethereum Book Project/Mastering Ethereum" https://github.com/ethereumbook/ethereumbook, Stand 5.10.2017

[6] Leemon Baird "The Swirlds Hashgraph Consensus Algorithm: Fair, Fast, Byzantine Fault Tolerance", Swirlds Tech Report SWIRLDS-TR-2016-01, 31.5.2016

[7] Leemon Baird "Overview of Swirlds Hashgraph", 31.5.2016

[8] Blockchain Oracles https://blockchainhub.net/blockchain-oracles/ Stand 14.03.2018

**Patentansprüche**

1. Steuersystem zum Steuern eines Ressourcenfreigabemoduls zur Bereitstellung von Ressourcen umfassend:

   - einen Sender zum Senden eines Bereitstellungsanfragedatensatzes mittels eines ersten Kommunikationsmoduls, wobei

      - der Bereitstellungsanfragedatensatz eine Bereitstellungsanforderung für eine einem Objekt zugeordneten Ressource umfasst,
      - der Bereitstellungsanfragedatensatz Senderinformationen des Senders des Bereitstellanfragedatensatzes umfasst,
      - der Bereitstellungsanfragedatensatz einen objektspezifischen Objektdatensatz für das Objekt umfasst;

   - ein verteiltes Datenbanksystem aufweisend

      - eine Vielzahl von Knoten, wobei die Knoten über ein erstes Kommunikationsnetzwerk miteinander verbunden sind;
      - zweites Kommunikationsmodul zum Empfangen des Bereitstellungsanfragedatensatzes;

   - ein erstes Überprüfungsmodul zum Überprüfen des Senders anhand der Senderinformationen, wobei das erste Überprüfungsmodul ein entsprechendes Senderprüfergebnis bereitstellt;
   - ein erstes Speichermodul zum Speichern des Bereitstellungsanfragedatensatzes mit dem entsprechenden Senderprüfergebnis in einer Anfragetransaktion, wobei

      - die Anfragetransaktion mittels des verteilten Datenbanksystems gespeichert wird,
      - die Anfragetransaktion mittels des verteilten Datenbanksystems an eine vorgegebene Anzahl von Empfängern übermittelt,
      - die vorgegebene Anzahl von Empfängern anhand des Senderprüfergebnis und/oder der Senderinformationen und/oder des objektspezifischen Objektdatensatzes und/oder des Bereitstellungsanfragedatensatzes ermittelt wird;

   - eine vorgegebene Anzahl von Anfrageverarbeitungsknoten, wobei

      - die vorgegebene Anzahl von Anfrageverarbeitungsknoten die vorgegebene Anzahl von Empfängern ist,
      - jeweils die Anfrageverarbeitungsknoten eine objektspezifische Berechtigungsfreigabe anhand der Bereitstellungsanforderung, des objektspezifischen Objektdatensatzes und der Senderinformation ermittelt,

   - ein Berechtigungssteuerungsmodul zum Ermitteln einer Gesamtberechtigungsfreigabe der dem Objekt zugeordneten Ressource, wobei

      - zum Ermitteln der Gesamtberechtigungsfreigabe die jeweiligen objektspezifischen Berechtigungsfreigaben der jeweiligen Anfrageverarbeitungsknoten berücksichtigt werden;

   - ein Ressourcenfreigabemodul, wobei

      - mittels der Gesamtberechtigungsfreigabe ein Bereitstellen der dem Objekt zugeordneten Ressource gesteuert wird.

2. Steuersystem nach Anspruch 1, wobei die Senderinformationen eine digitale Signatur und/oder einen eindeutigen Identifizierer und/oder eine Senderadresse und/oder einen kryptographischen Schlüssel umfassen.

3. Steuersystem nach einem der vorhergehenden Ansprüche, wobei der Sender das Gerät, das Objekt, ein Computerprogramm, eine Applikation oder ein neuronales Netzwerk ist.

4. Steuersystem nach einem der vorhergehenden Ansprüche, wobei die Ressourcen Energie und/oder Wasser und/oder Rohmaterialien und/oder Produkte und/oder Zahlungsmittel sind.

5. Steuersystem nach einem der vorhergehenden Ansprüche, wobei

- das Senden durch eine Zustandsänderung des Objektes gesteuert wird, die durch einen Sensor erfasst wird,
- beispielsweise das Objekt den Sensor umfasst,
- beispielsweise der Sender den Sensor umfasst.

6. Steuersystem nach einem der vorhergehenden Ansprüche, wobei

- der objektspezifische Objektdatensatz einen eindeutigen Identifizierer des Objektes und/oder eine Zustandsänderung des Objektes und/oder ein Fertigungsdatum des Objektes und/oder einen Wert des Objektes und/oder Anschaffungskosten des Objektes und/oder einen Objektzustand des Objektes zu einem vorgegebenen Zeitpunkt und/oder einen Objekttyp und/oder einen Hersteller des Objektes umfasst,
- der objektspezifische Objektdatensatz beispielsweise eine Adresse einer Datenquelle für weitere Informationen über das Objekt umfasst.
- beispielsweise der Objektzustand zu einem vorgegenen Zeitpunkt durch einen Sensor des Objektes ermittelt wird,
- insbesondere der vorgegebene Zeitpunkt der Zeitpunkt des Sendens des Bereitstellungsanfragedatensatzes oder der Zeitpunkt der Zustandsänderung ist.

7. Steuersystem nach einem der vorhergehenden Ansprüche, wobei

- das Objekt ein mobiles Gerät, ein Feldgerät, ein Produkt, eine Gasturbine, ein Turbine, ein Windturbine oder ein Gerät ist,
- die Zustandsänderung insbesondere eine Zustandsänderung einer Teilkomponente des Objektes ist,
- die Teilkomponente insbesondere ein elektronisches Bauteil des Objektes ist.

8. Steuersystem nach einem der vorhergehenden Ansprüche, wobei

- die Bereitstellungsanforderung eine Menge oder Anzahl der bereitzustellenden Ressource umfasst, und/oder
- die Bereitstellungsanforderung ein Ziel oder eine Adresse umfasst, der die Ressource bereitgestellt werden soll.

9. Steuersystem nach einem der vorhergehenden Ansprüche, wobei beim Prüfen des Senders eine Berechtigung des Senders überprüft wird.

10. Steuersystem nach einem der vorhergehenden Ansprüche, wobei eine Menge oder einer Anzahl der bereitzustellenden Ressource anhand des objektspezifischen Objektdatensatzes ermittelt wird.

11. Steuersystem nach einem der vorhergehenden Ansprüche, wobei

- das Steuersystem ein Registrierungsmodul zum Registrieren des Objektes mittels eines Registrierungsdatensatzes umfasst,
- der Registrierungsdatensatz einen eindeutigen Identifizierer des Objektes und/oder ein Fertigungsdatum des Objektes und/oder einen Wert des Objektes und/oder Anschaffungskosten des Objektes und/oder einen Objektzustand des Objektes zu einem vorgegebenen Zeitpunkt und/oder einen Objekttyp und/oder einen Hersteller des Objektes und/oder ein zugelassener Sender für den Bereitstellungsanfragedatensatz umfasst,
- beispielsweise der Objektzustand zu einem vorgegenen Zeitpunkt durch einen Sensor des Objektes ermittelt wird,
- insbesondere der vorgegebene Zeitpunkt ein Registrierungsdatum des Objektes beim Steuersystem ist,
- insbesondere der Registrierungsdatensatz in einer oder mehreren Transaktionen des verteilten Datenbanksystems gespeichert wird.

12. Steuersystem nach einem der vorhergehenden Ansprüche, wobei

- das verteilte Datenbanksystem eine Blockkette ist, oder
- das verteilte Datenbanksystem ein Peer-2-Peer Datenbanksystem ist.

13. Steuersystem nach einem der vorhergehenden Ansprüche, wobei Datenblöcke des verteilten Datenbanksystems über eine kryptographische Hashfunktion (H) miteinander verkettet sind.

14. Sender aufweisend:

- ein erstes Kommunikationsmodul zum Senden eines Bereitstellungsanfragedatensatzes, wobei

  - der Bereitstellungsanfragedatensatz eine Bereitstellungsanforderung für eine einem Objekt zugeordneten Ressource umfasst,
  - der Bereitstellungsanfragedatensatz Senderinformationen des Senders des Bereitstellanfragedatensatzes umfasst,
  - der Bereitstellungsanfragedatensatz einen objektspezifischen Objektdatensatz für das Objekt umfasst.

**15.** Verteiltes Datenbanksystem aufweisend

- eine Vielzahl von Knoten, wobei die Knoten über ein erstes Kommunikationsnetzwerk miteinander verbunden sind;
- zweites Kommunikationsmodul zum Empfangen eines Bereitstellungsanfragedatensatzes, wobei

  - der Bereitstellungsanfragedatensatz eine Bereitstellungsanforderung für eine einem Objekt zugeordneten Ressource umfasst,
  - der Bereitstellungsanfragedatensatz Senderinformationen des Senders des Bereitstellanfragedatensatzes umfasst,
  - der Bereitstellungsanfragedatensatz einen objektspezifischen Objektdatensatz für das Objekt umfasst;

- ein erstes Überprüfungsmodul zum Überprüfen des Senders anhand der Senderinformationen, wobei das erste Überprüfungsmodul ein entsprechendes Senderprüfergebnis bereitstellt;
- ein erstes Speichermodul zum Speichern des Bereitstellungsanfragedatensatzes mit dem entsprechenden Senderprüfergebnis in einer Anfragetransaktion, wobei

  - die Anfragetransaktion mittels des verteilten Datenbanksystems gespeichert wird,
  - die Anfragetransaktion mittels des verteilten Datenbanksystems an eine vorgegebene Anzahl von Empfängern übermittelt,
  - die vorgegebene Anzahl von Empfängern anhand des Senderprüfergebnis und/oder der Senderinformationen und/oder des objektspezifischen Objektdatensatzes ermittelt wird;

- eine vorgegebene Anzahl von Anfrageverarbeitungsknoten, wobei

  - die vorgegebene Anzahl von Anfrageverarbeitungsknoten die vorgegebene Anzahl von Empfängern ist,
  - jeweils die Anfrageverarbeitungsknoten eine objektspezifische Berechtigungsfreigabe anhand der Bereitstellungsanforderung, des objektspezifischen Objektdatensatzes und der Senderinformation ermittelt,
  - die jeweiligen objektspezifische Berechtigungsfreigabe in Transaktionen des verteilten Datenbanksystems gespeichert werden;

- ein Berechtigungssteuerungsmodul zum Ermitteln einer Gesamtberechtigungsfreigabe der dem Objekt zugeordneten Ressource, wobei

  - zum Ermitteln der Gesamtberechtigungsfreigabe die jeweiligen objektspezifischen Berechtigungsfreigaben der jeweiligen Anfrageverarbeitungsknoten berücksichtigt werden;
  - die Gesamtberechtigungsfreigabe in Transaktionen des verteilten Datenbanksystems gespeichert wird;

- ein Ressourcenfreigabemodul, wobei

  - mittels der Gesamtberechtigungsfreigabe ein Bereitstellen der dem Objekt zugeordneten Ressource gesteuert wird.

**16.** Verfahren zum rechnergestützten Steuern einer Bereitstellung von Ressourcen mit folgenden Verfahrensschritten:

- Senden eines Bereitstellungsanfragedatensatzes mittels eines ersten Kommunikationsmoduls, wobei

  - der Bereitstellungsanfragedatensatz eine Bereitstellungsanforderung für eine einem Objekt zugeordneten Ressource umfasst,
  - der Bereitstellungsanfragedatensatz Senderinformationen des Senders des Bereitstellanfragedatensatzes umfasst,
- der Bereitstellungsanfragedatensatz einen objektspezifischen Objektdatensatz für das Objekt umfasst;

- Empfangen des Bereitstellungsanfragedatensatzes;
- Überprüfen des Senders anhand der Senderinformationen, wobei das erste Überprüfungsmodul ein entsprechendes Senderprüfergebnis bereitstellt;
- Speichern des Bereitstellungsanfragedatensatzes mit dem entsprechenden Senderprüfergebnis in einer Anfragetransaktion, wobei

- die Anfragetransaktion mittels des verteilten Datenbanksystems gespeichert wird,
- die Anfragetransaktion mittels des verteilten Datenbanksystems an eine vorgegebene Anzahl von Empfängern übermittelt,
- das verteilte Datenbanksystem eine Vielzahl von Knoten aufweist, die über ein erstes Kommunikationsnetzwerk miteinander verbunden sind,
- die vorgegebene Anzahl von Empfängern anhand des Senderprüfergebnis und/oder der Senderinformationen und/oder des objektspezifischen Objektdatensatzes und/oder ermittelt wird;

- Ermitteln einer objektspezifischen Berechtigungsfreigabe anhand der Bereitstellungsanforderung, des objektspezifischen Objektdatensatzes und der Senderinformation mittels einer vorgegebenen Anzahl von Anfrageverarbeitungsknoten, wobei

- die vorgegebene Anzahl von Anfrageverarbeitungsknoten die vorgegebene Anzahl von Empfängern ist;

- Ermitteln einer Gesamtberechtigungsfreigabe der dem Objekt zugeordneten Ressource, wobei

- zum Ermitteln der Gesamtberechtigungsfreigabe die jeweiligen objektspezifischen Berechtigungsfreigaben der jeweiligen Anfrageverarbeitungsknoten berücksichtigt werden;

- Steuern eines Bereitstellens der dem Objekt zugeordneten Ressource mittels der Gesamtberechtigungsfreigabe.

**17.** Verfahren zum rechnergestützten Senden eines Bereitstellungsanfragedatensatzes mit folgenden Verfahrensschritten:

- Senden eines Bereitstellungsanfragedatensatzes mittels eines ersten Kommunikationsmoduls, wobei

- der Bereitstellungsanfragedatensatz eine Bereitstellungsanforderung für eine einem Objekt zugeordneten Ressource umfasst,
- der Bereitstellungsanfragedatensatz Senderinformationen des Senders des Bereitstellanfragedatensatzes umfasst,
- der Bereitstellungsanfragedatensatz einen objektspezifischen Objektdatensatz für das Objekt umfasst.

**18.** Verfahren zum rechnergestützten Steuern einer Bereitstellung von Ressourcen mit folgenden Verfahrensschritten:

- Empfangen des Bereitstellungsanfragedatensatzes, wobei

- der Bereitstellungsanfragedatensatz eine Bereitstellungsanforderung für eine einem Objekt zugeordneten Ressource umfasst,
- der Bereitstellungsanfragedatensatz Senderinformationen des Senders des der Bereitstellanfragedatensatzes umfasst,
- der Bereitstellungsanfragedatensatz einen objektspezifischen Objektdatensatz für das Objekt umfasst;

- Überprüfen des Senders anhand der Senderinformationen, wobei das erste Überprüfungsmodul ein entsprechendes Senderprüfergebnis bereitstellt;
- Speichern des Bereitstellungsanfragedatensatzes mit dem entsprechenden Senderprüfergebnis in einer Anfragetransaktion, wobei

- die Anfragetransaktion mittels des verteilten Datenbanksystems gespeichert wird,

- die Anfragetransaktion mittels des verteilten Datenbanksystems an eine vorgegebene Anzahl von Empfängern übermittelt,
- das verteilte Datenbanksystem eine Vielzahl von Knoten aufweist, die über ein erstes Kommunikationsnetzwerk miteinander verbunden sind,
- die vorgegebene Anzahl von Empfängern anhand des Senderprüfergebnis und/oder der Senderinformationen und/oder des objektspezifischen Objektdatensatzes und/oder ermittelt wird;

- Ermitteln einer objektspezifischen Berechtigungsfreigabe anhand der Bereitstellungsanforderung, des objektspezifischen Objektdatensatzes und der Senderinformation mittels einer vorgegebenen Anzahl von Anfrageverarbeitungsknoten, wobei

- die vorgegebene Anzahl von Anfrageverarbeitungsknoten die vorgegebene Anzahl von Empfängern ist,

- Ermitteln einer Gesamtberechtigungsfreigabe der dem Objekt zugeordneten Ressource, wobei

- zum Ermitteln der Gesamtberechtigungsfreigabe die jeweiligen objektspezifischen Berechtigungsfreigaben der jeweiligen Anfrageverarbeitungsknoten berücksichtigt werden;

- Steuern eines Bereitstellens der dem Objekt zugeordneten Ressource mittels der Gesamtberechtigungsfreigabe.

**19.** Computerprogrammprodukt mit Programmbefehlen zur Durchführung der Verfahren nach einem der Ansprüche 16-18.

**20.** Bereitstellungsvorrichtung für das Computerprogrammprodukt nach Anspruch 19, wobei die Bereitstellungsvorrichtung das Computerprogrammprodukt speichert und/oder bereitstellt.

Fig. 1

Fig. 2

NW1

150_S

220

240

201

230

S

Fig. 3

Fig. 4

410
420
430
435
440
450
460
465
470
N
Y

Fig. 6

610
620
625
630
640
650
655
660
N
Y

580

Fig. 5

510

Europäisches
Patentamt

European
Patent Office

Office européen
des brevets

**EUROPÄISCHER RECHERCHENBERICHT**

Nummer der Anmeldung

EP 18 18 0845

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2018/019364 A1 (NEC LABORATORIES EUROPE GMBH [DE]) 1. Februar 2018 (2018-02-01) | 14,17 | INV. H04L29/06 |
| A | * Abbildungen 3,4 * <br> * Seite 8, Zeile 12 - Seite 8, Zeile 22 * <br> * Seite 13, Zeile 26 - Seite 14, Zeile 31 * | 1-13,15, 16,18-20 | |
| | ----- | | |
| A | US 2017/085545 A1 (LOHE TIMOTHY [US] ET AL) 23. März 2017 (2017-03-23) <br> * Absatz [0209]; Abbildung 17 * <br> * Absatz [0388] * | 1-20 | |
| | ----- | | |
| A | US 2012/117157 A1 (RISTOCK HERBERT W A [US]) 10. Mai 2012 (2012-05-10) <br> * Abbildungen 2,3,5 * <br> * Absatz [0001] - Absatz [0007] * <br> * Absatz [0026] - Absatz [0030] * <br> * Absatz [0056] - Absatz [0059] * <br> ----- | 1-20 | |

RECHERCHIERTE SACHGEBIETE (IPC)

H04L

Der vorliegende Recherchenbericht wurde für alle Patentansprüche erstellt

| Recherchenort | Abschlußdatum der Recherche | Prüfer |
|---|---|---|
| München | 24. September 2018 | Pohl, Daniel |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 18 0845

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-09-2018

| Im Recherchenbericht angeführtes Patentdokument | Datum der Veröffentlichung | Mitglied(er) der Patentfamilie | Datum der Veröffentlichung |
|---|---|---|---|
| WO 2018019364 A1 | 01-02-2018 | KEINE | |
| US 2017085545 A1 | 23-03-2017 | KEINE | |
| US 2012117157 A1 | 10-05-2012 | US 2012117157 A1<br>US 2014136267 A1<br>US 2015332221 A1<br>WO 2012064560 A1 | 10-05-2012<br>15-05-2014<br>19-11-2015<br>18-05-2012 |

Für nähere Einzelheiten zu diesem Anhang : siehe Amtsblatt des Europäischen Patentamts, Nr.12/82

**EP 3 576 368 A1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ANDREAS M. ANTONOPOULOS.** Mastering Bitcoin: Unlocking Digital Cryptocurrencies. O'Reilly Media, Dezember 2014
- **ROGER M. NEEDHAM ; MICHAEL D. SCHROEDER.** Using encryption for authentication in large networks of computers. *ACM: Communications of the ACM,* Dezember 1978, vol. 21 (12
- **ROSS ANDERSON.** Security Engineering. A Guide to Building Dependable Distributed Systems. Wiley, 2001
- **HENNING DIEDRICH.** Ethereum: Blockchains, Digital Assets, Smart Contracts, Decentralized Autonomous Organizations. CreateSpace Independent Publishing Platform, 2016
- The Ethereum Book Project/Mastering Ethereum. 05. Oktober 2017
- **LEEMON BAIRD.** The Swirlds Hashgraph Consensus Algorithm: Fair, Fast, Byzantine Fault Tolerance. *Swirlds Tech Report SWIRLDS-TR-2016-01,* 31. Mai 2016
- **LEEMON BAIRD.** *Overview of Swirlds Hashgraph,* 31. Mai 2016
- *Blockchain Oracles,* 14. Marz 2018, https://blockchainhub.net/blockchain-oracles/